(19) Europäisches Patentamt
European Patent Office
Office européen des brevets

(11) EP 3 678 127 A1

(12) # EUROPEAN PATENT APPLICATION

published in accordance with Art. 153(4) EPC

(43) Date of publication:
**08.07.2020 Bulletin 2020/28**

(21) Application number: **18851227.1**

(22) Date of filing: **21.08.2018**

(51) Int Cl.:
***G10K 11/16*** *(2006.01)* ***G10K 11/162*** *(2006.01)*
***G10K 11/168*** *(2006.01)*

(86) International application number:
**PCT/JP2018/030805**

(87) International publication number:
**WO 2019/044589 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2017 JP 2017163666**

(71) Applicant: **FUJIFILM Corporation**
**Tokyo 106-8620 (JP)**

(72) Inventors:
- **OHTSU, Akihiko**
  **Ashigara-kami-gun, Kanagawa 258-8577 (JP)**
- **HAKUTA ,Shinya**
  **Ashigara-kami-gun, Kanagawa 258-8577 (JP)**
- **YAMAZOE ,Shogo**
  **Ashigara-kami-gun, Kanagawa 258-8577 (JP)**
- **SUGAWARA, Yoshihiro**
  **Ashigara-kami-gun, Kanagawa 258-8577 (JP)**

(74) Representative: **Hoffmann Eitle**
**Patent- und Rechtsanwälte PartmbB**
**Arabellastraße 30**
**81925 München (DE)**

(54) **SOUND PROOF STRUCTURE AND SOUND PROOF BODY**

(57) Provided is a soundproof structure including a film-shaped member which has a plurality of through-holes penetrating in a thickness direction, in which in a hole radius distribution histogram function $\sigma(r)$, in a case where the hole radius at which an opening ratio $\sigma$ is maximum is denoted by ro, a total opening ratio of all the through-holes is denoted by $\sigma_{sum}$, and a thickness of the film-shaped member is denoted by t, an acoustic impedance $Z_0$ of the film-shaped member represented by the following Expression (1) satisfies the following Expression (2) and the hole radius distribution histogram satisfies the following Expression (3).

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

$$\mathrm{Re}\,(Z_0) < 2 \times Z_{air} \ldots (2)$$

$$\int_0^{r_0}\sigma(r)dr > \int_{r_0}^{\infty}\sigma(r)dr \quad \cdots (3)$$

The soundproof structure can absorb sound with a high absorbance at a broad band.

EP 3 678 127 A1

FIG. 1

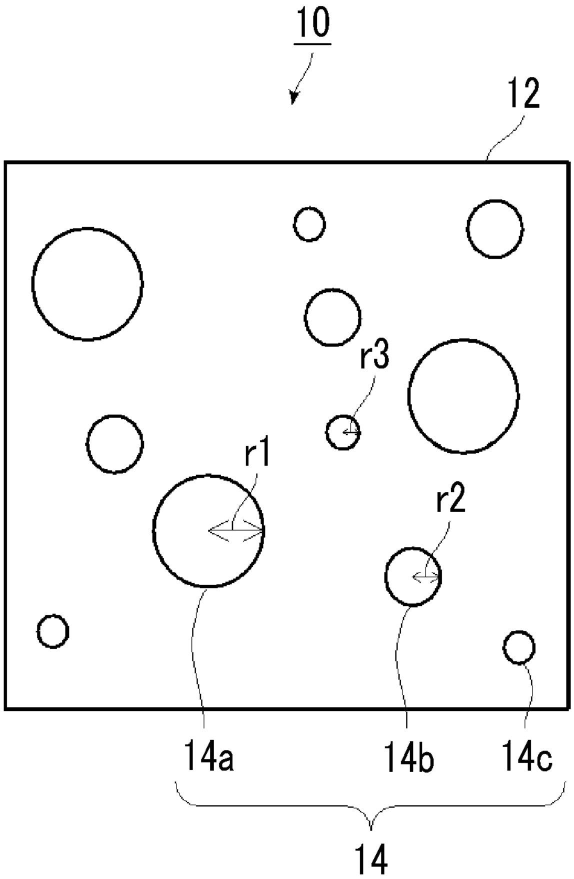

## Description

## BACKGROUND OF THE INVENTION

1. Field of the Invention

The present invention relates to a soundproof structure and a soundproof structure body.

2. Description of the Related Art

A soundproof structure such as a sound absorbing structure is applied to a wide-range and used in various places or environments. Therefore, there is proposed the soundproof structure using a micro-perforated plate having a large number of circular microholes penetrating in a thickness direction (JP2007-162253A and JP2007-183447A).

For example, JP2007-162253A discloses that a reverberation reduction device reduces reverberation time in a living room space by forming a large number of microholes which penetrate in a thickness direction in a stair riser, a back plate on a lower surface of a tread plate, a door panel of a storage room under a staircase, a door panel of storage furniture, or a side panel of a banister which are provided in the family room such as a living room of a house and by adding a sound absorbing performance obtained by providing the stair riser and a space under the staircase to the staircase.

In addition, JP2007-183447A discloses that a practical reverberation reduction device can easily realize a sound environment, in which conversation is easy to hear, by drilling a large number of microholes penetrating in the thickness direction on a front panel of storage furniture, a panel board provided on an upper side of the storage furniture, or one panel board of multi-layer panel boards such as a partition, performing sound absorbing by using the front panel or the panel board and an air layer of a back space thereof to reduce reverberation time in an office space.

## SUMMARY OF THE INVENTION

In the reverberation sound reduction device disclosed in JP2007-162253A, a large number of microholes are formed in a plate material such as a stair riser. In addition, in the reverberation sound reduction device disclosed in JP2007-183447A, a large number of microholes are formed in a plate material such as a front plate of storage furniture. Therefore, in JP2007-162253A and JP2007-183447A, it is disclosed that a diameter of the microhole in the micro-perforated plate is appropriately set according to a required performance and 1 mm or less is more preferable. However, in some embodiments, 0.6 mm is described, and microholes of 0.1 mm or less are not specifically described. n addition, it is disclosed that a pitch of the microholes is more preferably 0.8 to 10 mm, and the microholes disclosed in drawings are regularly disposed in the plate material.

Therefore, neither disclosure nor suggestion about variation in the diameter of the microholes used in the reverberation sound reduction device or about the distribution of the diameters is disclosed in JP2007-162253A or JP2007-183447A. The microholes of the micro-perforated plate disclosed in JP2007-162253A and JP2007-183447A are physically drilled using a drill or punching, the diameter of the microholes is basically uniform, and the variation thereof is negligibly small. Therefore, in JP2007-162253A or JP2007-183447A, the distribution of diameters does not matter.

However, in a case of a microhole having a hole radius of 0.1 mm or less, such as a microhole drilled in a metal plate or the like, there is a case of being drilled by chemical treatment. Accordingly, it is considered that a drilling position of the microhole varies, a diameter of the microholes also varies, and as a result, the diameter of the microholes is distributed.

Therefore, there is a problem that the technique disclosed in JP2007-162253A or JP2007-183447A cannot be applied to a soundproof structure using a plate-shaped member or a film-shaped member, in which microholes having the distributed hole radius are formed.

An object of the present invention is to solve the problems of the related art by providing a soundproof structure and a soundproof structure body which can absorb sound with high absorbance at a broad band.

In order to achieve the above object, a soundproof structure of a first aspect of the present invention comprising a film-shaped member having a plurality of through-holes penetrating in a thickness direction, in which in a hole radius distribution histogram function $\sigma(r)$ representing an opening ratio $\sigma$ with respect to a hole radius r of the plurality of through-holes in the film-shaped member, in a case where the hole radius at which the opening ratio $\sigma$ is maximum is denoted by ro, a total opening ratio of all the through-holes is denoted by $\sigma_{sum}$, and a thickness of the film-shaped member is denoted by t, an acoustic impedance Zo of the film-shaped member represented by the following Expression (1) satisfies the following Expression (2) and a hole radius distribution histogram satisfies the following Expression (3).

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

$$\mathrm{Re}\,(Z_0) < 2 \times Z_{air} \ldots (2)$$

$$\int_0^{r_0}\sigma(r)dr > \int_{r_0}^{\infty}\sigma(r)dr \quad \cdots (3)$$

$$\sigma_{sum} = \int_0^{\infty}\sigma(r)dr$$

In order to achieve the above object, a soundproof structure of a second aspect of the present invention comprising a film-shaped member having a plurality of through-holes penetrating in a thickness direction, in which in a hole radius distribution histogram function $\sigma(r)$ representing an opening ratio $\sigma$ with respect to a hole radius r of the plurality of through-holes in the film-shaped member, in a case where the hole radius at which the opening ratio $\sigma$ is maximum is denoted by ro, a total opening ratio of all the through-holes is denoted by $\sigma_{sum}$, and a thickness of the film-shaped member is denoted by t, an acoustic impedance Zo of the film-shaped member represented by the following Expression (1) satisfies the following Expression (4) and a hole radius distribution histogram satisfies the following Expression (5).

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

$$\mathrm{Re}\,(Z_0) > 2 \times Z_{air} \ldots (4)$$

$$\int_0^{r_0}\sigma(r)dr < \int_{r_0}^{\infty}\sigma(r)dr \quad \cdots (5)$$

$$\sigma_{sum} = \int_0^{\infty}\sigma(r)dr$$

In the first aspect and the second aspect, here, $\rho$ denotes a density of air, $\eta$ denotes a viscosity of air, $\omega$ denotes an angular frequency, $J_0$ (x) and Ji (x) each denote a first kind Bessel function respectively, i denotes an imaginary unit, and $Z_{air}$ denotes an acoustic impedance of air, Re (*) denotes a real part of a complex number *. In addition, $k' = r_0\sqrt{(\rho\omega/\eta)}$. In addition, $\sigma_{sum}$ is represented by the above Expression.

Here, in the soundproof structure of the first aspect or the second aspect, it is preferable that the thickness t of the film-shaped member is 0.1 mm or less.

In addition, it is preferable that the hole radius r of the plurality of through-holes is 0.1 mm or less.

Furthermore, it is preferable that the plurality of through-holes are randomly arranged in the film-shaped member.

Furthermore, it is preferable that at least a portion having the through-hole of the film-shaped member is formed of metal.

Furthermore, it is preferable that the metal includes nickel, copper, or iron.

Furthermore, it is preferable that the metal includes aluminum.

Furthermore, it is preferable that the soundproof structure further comprises a mesh structure laminated on the film-shaped member.

In order to achieve the above object, a soundproof structure body according to a third aspect of the present invention includes the soundproof structure according to any one of the first aspect and the second aspect and a back air layer fully closed on a back surface of the soundproof structure.

Here, the back air layer is preferably configured by a honeycomb structure.

In addition, it is preferable that the back air layer has an opening, and includes a frame in which one opening end of the opening is disposed on one surface of the film-shaped member of the soundproof structure, and a back plate closing the other opening end of the opening of the frame.

Furthermore, it is preferable that two soundproof structures are provided and the back air layer is disposed between the two soundproof structures.

Furthermore, it is preferable that the back air layer has an opening, and includes a frame in which one opening end of the opening is disposed on one surface of the film-shaped member of one soundproof structure of two soundproof structures, and the other soundproof structure of two soundproof structures closing the other opening end of the opening of the frame.

Furthermore, the frame preferably has a honeycomb structure.

Furthermore, a soundproof structure body of the present invention includes the soundproof structure according to any one of the first aspect and the second aspect and an opening, and further includes a frame in which one opening end of the opening is disposed on one surface of the film-shaped member of the soundproof structure, and a back plate closing the other opening end of the opening of the frame, in which the frame and the back plate are preferably configured to a back air layer.

Furthermore, the soundproof structure body of the present invention includes two soundproof structures according to any one of the first aspect and the second aspect and an opening, and further includes a frame which has an opening and in which one opening end of the opening is disposed on one surface of the film-shaped member of one soundproof structure of the two soundproof structures, and the other soundproof structure of the two soundproof structures closing the other opening end of the opening of the frame, in which the frame and the other soundproof structure are preferably configured to a back air layer of the one soundproof structure.

According to the present invention, there can be provided a soundproof structure and a soundproof structure body which can absorb sound with high absorbance at a broad band.

## BRIEF DESCRIPTION OF THE DRAWINGS

Fig. 1 is a front view conceptually and partially showing an example of a soundproof structure according to an embodiment of the present invention.

Fig. 2 is a cross-sectional view of the soundproof structure shown in Fig. 1.

Fig. 3 is an example of a hole radius distribution histogram representing an opening ratio $\sigma$ with respect to a hole radius r of a through-hole in a soundproof structure according to the present invention.

Fig. 4 is another example of the hole radius distribution histogram representing the opening ratio $\sigma$ with respect to the hole radius r of the through-hole of the soundproof structure according to the present invention.

Fig. 5 is a conceptual diagram of a sound absorbing model of a film-shaped member having a micro through-hole in the soundproof structure according to the present invention.

Fig. 6 is a graph showing a size of a real part of an example of an acoustic impedance of the film-shaped member in the sound absorbing model shown in Fig. 5 with respect to the hole radius and the opening ratio.

Fig. 7 is a graph showing the size of the imaginary part of the acoustic impedance shown in Fig. 6 with respect to the hole radius and the opening ratio.

Fig. 8 is a graph showing the size of an example of sound absorbance of the sound absorbing model shown in Fig. 5 with respect to the hole radius and the opening ratio.

Fig. 9A is a contour diagram of the real part of the acoustic impedance shown in Fig. 6.

Fig. 9B is a schematic cross-sectional view of the soundproof structure body in which one side of a back air layer has a soundproof structure and the other side has a rigid body.

Fig. 10 is a graph showing the relationship between a distance and the resolution of eyes.

Fig. 11 is a schematic cross-sectional view illustrating an example of a suitable method of manufacturing an aluminum plate of the present invention.

Fig. 12 is a schematic cross-sectional view illustrating an example of a suitable method of manufacturing an aluminum plate of the present invention.

Fig. 13 is a schematic cross-sectional view illustrating an example of a suitable method of manufacturing an aluminum plate of the present invention.

Fig. 14 is a schematic cross-sectional view illustrating an example of a suitable method of manufacturing an aluminum plate of the present invention.

Fig. 15 is a schematic cross-sectional view illustrating an example of a suitable method of manufacturing an aluminum plate of the present invention.

Fig. 16 is a cross-sectional view conceptually showing the soundproof structure according to another embodiment of the present invention.

Fig. 17 is the hole radius distribution histogram representing an opening ratio $\sigma$ with respect to a hole radius r of a through-hole of a soundproof structure according to Example 1 of the present invention.

Fig. 18 is a hole radius distribution histogram in Comparative example 1-1 of the soundproof structure.

Fig. 19 is a hole radius distribution histogram in Comparative example 1-2 of the soundproof structure.

Fig. 20 is a hole radius distribution histogram in Comparative example 1-3 of the soundproof structure.

Fig. 21 is a hole radius distribution histogram in Reference example 1 of the soundproof structure.

Fig. 22 is a graph of the sound absorbance with respect to a standard deviation of the hole radius distribution of the soundproof structure.

Fig. 23 is a hole radius distribution histogram of the soundproof structure in Example 2 of the present invention.

Fig. 24 is a hole radius distribution histogram of the soundproof structure in Comparative example 2-1.

Fig. 25 is a hole radius distribution histogram of the soundproof structure in Comparative example 2-2.

Fig. 26 is a hole radius distribution histogram of the soundproof structure in Comparative example 2-3.

Fig. 27 is a hole radius distribution histogram of the soundproof structure in Reference example 2-1.

Fig. 28 is a hole radius distribution histogram of the soundproof structure in Reference example 2-2.

Fig. 29 is a graph of the sound absorbance with respect to the standard deviation of the hole radius distribution of the soundproof structure.

Fig. 30 is a cross-sectional view conceptually showing the soundproof structure according to the other embodiment of the present invention.

Fig. 31 is a cross-sectional view conceptually showing the soundproof structure according to the other embodiment of the present invention.

Fig. 32 is a cross-sectional view conceptually showing the soundproof structure according to the other embodiment of the present invention.

Fig. 33 is a hole radius distribution histogram of the soundproof structure in Example 3 of the present invention.

Fig. 34 is a hole radius distribution histogram of the soundproof structure in Comparative example 3.

Fig. 35 is a graph of the sound absorbance with respect to a sound frequency of the soundproof structure body of the present invention in Example 3 and Comparative example 4.

## DESCRIPTION OF THE PREFERRED EMBODIMENTS

Hereinafter, the present invention will be described in detail.

The description of constituent elements described below is made based on representative embodiments of the present invention, but the present invention is not limited to such embodiments.

The numerical range expressed by using "to" in this specification means a range including numerical values described before and after "to" as a lower limit value and an upper limit value.

[Soundproof structure]

A soundproof structure according to a first aspect of the present invention is a soundproof structure including a film-shaped member having a plurality of through-holes penetrating in a thickness direction, in which in a hole radius distribution histogram function $\sigma(r)$ representing an opening ratio $\sigma$ with respect to a hole radius r of the plurality of through-holes in the film-shaped member, in a case where the hole radius at which the opening ratio $\sigma$ is maximum is denoted by ro, a total opening ratio of all the through-holes is denoted by $\sigma_{sum}$, and a thickness of the film-shaped member is denoted by t, an acoustic impedance Zo of the film-shaped member represented by the following Expression (1) satisfies the following Expression (2) and a hole radius distribution histogram satisfies the following Expression (3).

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

$$\mathrm{Re}\,(Z_0) < 2 \times Z_{air} \ \ldots (2)$$

$$\int_0^{r_0}\sigma(r)dr > \int_{r_0}^{\infty}\sigma(r)dr \quad \cdots (3)$$

A soundproof structure according to a second aspect of the present invention is a soundproof structure including a film-shaped member having a plurality of through-holes penetrating in a thickness direction, in which in a hole radius distribution histogram function $\sigma(r)$ representing an opening ratio $\sigma$ with respect to a hole radius r of the plurality of through-holes in the film-shaped member, in a case where the hole radius at which the opening ratio $\sigma$ is maximum is denoted by $r_0$, a total opening ratio of all the through-holes is denoted by $\sigma_{sum}$, and a thickness of the film-shaped member is denoted by t, an acoustic impedance $Z_0$ of the film-shaped member represented by the following Expression (1) satisfies the following Expression (4) and a hole radius distribution histogram satisfies the following Expression (5)..

$$\mathrm{Re}\,(Z_0) > 2 \times Z_{air} \ldots (4)$$

$$\int_0^{r_0} \sigma(r)dr < \int_{r_0}^{\infty} \sigma(r)dr \quad \cdots (5)$$

In the first aspect and the second aspect, here, p denotes a density of air, $\eta$ denotes a viscosity of air, $\omega$ denotes an angular frequency, $J_0$ (x) and Ji (x) each denote a first kind Bessel function respectively, i denotes an imaginary unit, and $Z_{air}$ denotes an acoustic impedance of air, Re (*) denotes a real part of a complex number *. In addition, $k' = r_0\sqrt{(\rho\omega/\eta)}$. In addition, $\sigma_{sum}$ is represented by the following Expression.

$$\sigma_{sum} = \int_0^{\infty} \sigma(r)dr \quad \cdots (6)$$

A configuration of a soundproof structure according to the embodiment of the present invention will be described with reference to Figs. 1 to 4.

Fig. 1 is a schematic front view showing an example of a suitable embodiment of a soundproof structure of the present invention, Fig. 2 is a cross-sectional view of Fig. 1.

As shown in Figs. 1 and 2, the soundproof structure 10 of the embodiment of the present invention includes a film-shaped member 12 having a plurality of through-holes 14 (14a, 14b, and 14c) penetrating in a thickness direction.

In the soundproof structure 10 shown in Fig. 1, the plurality of through-holes 14 are through-holes 14 a, 14 b, and 14 c having three different hole radii, but in the present invention, a through-hole 14 may have four or more of various different hole radii.

For example, in a hole radius distribution histogram shown in Fig. 3, hole radii r of all the through-holes 14 are classified into 0.5 $\mu$m interval and classified into 50 kinds of hole radii r from 0.5 $\mu$m to 25.0 $\mu$m. Fig. 3 shows an opening ratio $\sigma$ with respect to the hole radius r classified as described above, which can be referred to as a hole radius distribution histogram function $\sigma(r)$. In Fig. 3, the hole radius $r_0$ at which the opening ratio $\sigma$ is maximum is 12 $\mu$m. Here, the hole radius $r_0$ can also be referred to as a hole radius at which strength of a hole radius distribution histogram function $\sigma(r)$ is maximum.

On the other hand, in a hole radius distribution histogram shown in Fig. 4, hole radii r of all the through-holes 14 are classified into 0.5 $\mu$m interval and classified into 26 kinds of hole radii r from 0.5 $\mu$m to 13.0 $\mu$m. Fig. 4 can also be referred to as a hole radius distribution histogram function $\sigma(r)$ as in Fig. 3. Here, in Fig. 4, the hole radius ro at which the opening ratio $\sigma$ is maximum is 3 $\mu$m.

The soundproof structure 10 according to the embodiment of the present invention is used in a copying machine, a blower, air conditioning equipment, a ventilator, a pump, a generator, a duct, industrial equipment including various kinds of manufacturing equipment capable of emitting sound such as a coating machine, a rotary machine, and a conveyor machine, transportation equipment such as an automobile, a train, and aircraft, general household equipment such as a refrigerator, a washing machine, a dryer, a television, a copying machine, a microwave oven, a game machine, an air conditioner, a fan, a PC (Personal Computer), a vacuum cleaner, an air purifier, and a ventilator, and the like, and is appropriately disposed at a position through which sound generated from a noise source passes in various apparatuses.

In the present invention, sound absorbance is obtained by applying a sound absorbing model 20 of a film-shaped member (hereinafter, also referred to as a micro through-hole film) 12 having micro through-holes 14, as shown in Fig. 5.

In the sound absorbing model 20 shown in Fig. 5, the micro through-hole film 12 is disposed in a tube body 22 so as to be orthogonal to the tube body. In the sound absorbing model 20, a thickness of the micro through-hole film 12 is ignored, and it is assumed that there is no thickness.

In the sound absorbing model 20 in Fig. 5, sound enters the micro through-hole film 12 toward the left side of the tube body 22 in Fig. 5, passes through the micro through-hole film 12, and is emitted from the right side of the tube body 22 in Fig. 5. Here, assuming that on the left side of the micro through-hole film 12 in Fig. 5, sound pressure of an incident-side air incident on the micro through-hole film 12 is PI and air particle velocity is u1, and on the left side of the micro through-hole film 12 in Fig. 5, sound pressure of an emitted-side air emitted from the micro through-hole film 12 is P2 and air particle velocity is u2, four Expressions represented in the following Expression (7) are established.

$$P1 = Pi + Pr$$
$$P2 = Pt$$
$$u1 = ui - ur$$
$$u2 = ut \quad \dots (7)$$

Here, Pi is incident sound pressure, ui is incident particle velocity, Pr is reflected sound pressure, ur is reflected particle velocity, Pt is transmitted sound pressure, and ut is transmitted particle velocity.

In consideration of the sound absorbing model 20 shown in Fig.5, the acoustic impedance $Z_{MPP}$ of the micro through-hole film 12 is obtained as the following Expression (8) referring to the Expression (7.35) in p. 256 of Acoustic Absorbers and Diffusers, Third Edition (CRC Press).

$$Z_{MPP} = Z_h + Z_{h1} + Z_{h2} \quad \dots (8)$$

$Z_h$, $Z_{h1}$, and $Z_{h2}$ on the right side of the above Expression (8) are given by each Expression included in the following Expression (9). A first item $Z_h$ on the right side is impedance of the through-hole 14. A second item $Z_{h1}$ on the right side is radiation resistance of a portion of the through-hole 14. A third item $Z_{h2}$ on the right side is an opening end correction term in consideration of radiation reactance of the portion of the through-hole 14.

$$Z_h = i\frac{\omega \rho t}{\sigma}\left(1 - \frac{2J_1\left(k'\sqrt{-i}\right)}{k'\sqrt{-i}J_0\left(k'\sqrt{-i}\right)}\right)^{-1}$$
$$Z_{h1} = \frac{\sqrt{2\omega\rho\eta}}{2\sigma}$$
$$Z_{h2} = i\frac{1.7\omega\rho r}{\sigma} \quad \cdots (9)$$

As a result, the above Expression (8) is represented as the following Expression (10) by substituting each Expression of the above Expression (9) for $Z_h$, $Z_{h1}$, and $Z_{h2}$ on the right side of the above Expression (8).

$$Z_{MPP} = i\frac{\omega \rho t}{\sigma}\left(1 - \frac{2J_1\left(k'\sqrt{-i}\right)}{k'\sqrt{-i}J_0\left(k'\sqrt{-i}\right)}\right)^{-1} + \frac{\sqrt{2\omega\rho\eta}}{2\sigma} + i\frac{1.7\omega\rho r}{\sigma} \quad \cdots (10)$$

The acoustic impedance $Z_{MPP}$ of the micro through-hole film 12 given by the above Expression (10) is acoustic impedance of such a film-shaped member 12 in a case where a hole radius of a large number of through-holes 14 in the micro through-hole film 12 is denoted by r, an opening ratio of all the through-holes 14 is denoted by $\sigma$, and a thickness of the film-shaped member 12 is denoted by t.

Here, $\rho$ denotes a density of air, $\eta$ denotes a viscosity of air, $\omega$ denotes an angular frequency, $J_0$ (x) and $J_1$ (x) each denote a first kind Bessel function respectively, i denotes an imaginary unit, $Z_{air}$ denotes an acoustic impedance of air, Re (*) denotes a real part of a complex number *, and $k' = r\sqrt{(\rho\omega/\eta)}$.

Next, in the sound absorbing model 20 shown in Fig. 5, the following Expression (11) is established in a case where a transfer matrix is used.

$$\begin{pmatrix} p_1 \\ u_1 \end{pmatrix} = \begin{pmatrix} 1 & Z_{MPP} \\ 0 & 1 \end{pmatrix} \begin{pmatrix} p_2 \\ u_2 \end{pmatrix} \quad \cdots (11)$$

The following Expression (12) is obtained from the above Expression (11).

$$P1 = P2 + Z_{MPP}u2$$
$$u1 = u2 \ldots (12)$$

The following Expressions (13) and (14) are obtained by substituting the two Expressions included in the above Expression (12) with the four Expressions included in the above Expression (9).

$$Pi + Pr = Pt ++ Z_{MPP}ut \ldots (13)$$

$$ui - ur = ut \ldots (14)$$

Here, the acoustic impedance $Z_{air}$ of air is represented by $Z_{air}$ = Pt/ut in a case where transmitted sound pressure is Pt and transmitted particle velocity is ut. Therefore, the following Expression is represented from the above Expression (13).

$$Pi + Pr = Pt ++ Z_{MPP}ut = Pt ++ Z_{MPP}Pt/Z_{air}$$
$$= Pt\,(1 + Z_{MPP}/Z_{air})$$

In a case where both sides of the above Expression are divided by Pi, the following Expression (15) is obtained.

$$1 + Pr / Pi = (Pt/Pi)\,(1 + Z_{MPP}/Z_{air}) \ldots (15)$$

Here, since a reflection coefficient rf = Pr/Pi and a transmission coefficient tr = Pt/Pi, the above Expression (15) becomes the following Expression (16).

$$1 + rf = tr\,(1 + Z_{MPP}/Z_{air}) \ldots (16)$$

In a case where both sides of the above Expression (14) are divided by ui, the reflection coefficient rf = ur/ui and the transmission coefficient tr = ut/ui are given. Therefore, the above Expression (16) becomes the following Expression (17).

$$1 - ur/ui = ut/ui = 1 - rf = tr \ldots (17)$$

Based on the above Expressions (16) and (17), rf and tr are represented by the following Expression (18).

$$rf = Z_{MPP}/(2Z_{air} + Z_{MPP})$$
$$tr = 2Z_{air}/(2Z_{air} + Z_{MPP}) \ldots (18)$$

Thus, using the reflection coefficient rf and the transmission coefficient tr obtained by the above Expression (18), reflectance R, transmittance T, and absorbance A can be obtained by the following Expression (19).

$$R = rf^2$$

$$T = tr^2$$

$$A = 1 - R - T \ldots (19)$$

Thus, the absorbance A, which is the sound absorbance, can be obtained.

Here, the acoustic impedance $Z_{air}$ of air is given by multiplying sound velocity c and air density $\rho$. That is, $Z_{air} = \rho c$.

As described above, the reflection coefficient rf and the transmission coefficient tr are obtained from the above Expression (18) by using the acoustic impedance $Z_{MPP}$ of the micro through-hole film 12 obtained based on the above Expression (10), and then the reflectance R, the transmittance T, and the absorbance A can be obtained from the above Expression (19).

In a case where the acoustic impedance $Z_{MPP}$ of the micro through-hole film 12 defined by the above Expression (10) and the absorbance A defined by the above Expression (19) are calculated and graphed by changing the hole radius r and the opening ratio $\sigma$, a real part $Re(Z_{MPP})$, an imaginary part $Im(Z_{MPP})$, and the absorbance A of the acoustic impedance $Z_{MPP}$ are as shown in Figs. 6 to 9A, respectively. Fig. 9A is a concentration scale distribution diagram of the real part $Re(Z_{MPP})$ of the acoustic impedance $Z_{MPP}$ in Fig. 6 (a two-dimensional map in which the lateral axis represents the hole radius and the vertical axis represents the opening ratio), in which the value of real part $Re(Z_{MPP})$ is represented as a contour map. Here, the thickness t of the film-shaped member 12 is 20 mm, the air density $\rho$ is 1.205 (kg/m$^3$), the air viscosity $\eta$ is 1.84 Pa·N, and the air acoustic impedance $Z_{air}$ is 413.3 (kg/(m$^2$s)).

In Figs. 6 to 8, a white portion indicates that each of values is large, and a black portion indicates that each of values is small.

As shown in Figs.6 and 7, since the imaginary part $Im(Z_{MPP})$ is very small with respect to real part $Re(Z_{MPP})$, the imaginary part $Im(Z_{MPP})$ can be substantially negligible. That is, in a case of calculating the absorbance, it can be seen that having only to consider the real part $Re(Z_{MPP})$, a value can be obtained.

Furthermore, in Fig. 8, the black portion is directed to the white portion from the lower left toward the upper right and the black portion is directed to the white portion from the upper right toward the lower left. Therefore, the whitest portion is a boundary line between the two portions, and the absorbance is the highest on the boundary line. Here, in a case of comparing Fig. 8 to Fig. 9A, the boundary line having the highest absorbance in Fig. 8 is regarded as a contour line in which the real part $Re(Z_{MPP})$ of the acoustic impedance $Z_{MPP}$ is 826.6 (kg/(m$^2$s)) in Fig. 9A. As described above, since the acoustic impedance $Z_{air}$ of air is 413.3 (kg/(m$^2$s)), a contour line regarded as the boundary line can be represented by $2 \times 413.3$ (kg/(m$^2$s)) = $2 \times Z_{air}$.

In Fig. 9A, a region on the upper right side from the contour line represented by $2 \times Z_{air}$ is defined as a region (A), and a region on the lower left side from the contour line is defined as a region (B).

The region (A) is a region where the real part $Re(Z_{MPP})$ of the acoustic impedance $Z_{MPP}$ is smaller than $2 \times Z_{air}$ and where the absorbance is improved as the hole radius r decreases and the opening ratio $\sigma$ decreases.

The region (B) is a region where the real part $Re(Z_{MPP})$ of the acoustic impedance $Z_{MPP}$ is greater than $2 \times Z_{air}$ and where the absorbance is improved as the hole radius r increases and the opening ratio $\sigma$ increases.

In the soundproof structure 10 shown in Figs. 1 and, a plurality of micro through-holes 14 formed on the film-shaped member 12 is classified into a large number of hole radii as shown in Fig. 3 or 4.

As shown in Fig. 3 or Fig. 4, in a case where the plurality of through-holes 14 have hole radii classified into different kinds, each kind of hole radius is denoted by $r_1, r_2, ..., r_m$ (that is, $r_j$ (j = 1, 2, ..., m)) (m is an integer of 2 or more), and the opening ratio of one or more through-holes 14 having the hole radius $r_j$ is denoted by $\sigma_1, \sigma_2, ..., \sigma_m$ (that is, $\sigma_j$ (j = 1, 2, ..., m)). In this case, a thickness of the film-shaped member 12 is t.

Using the hole radii $r_j$ and the opening ratio $\sigma_j$ of one or more through-holes 14 having the hole radii $r_j$, acoustic impedance $Z_j$ (j = 1, 2, ..., m) corresponding to the plurality of through-holes 14 having the hole radii $r_j$ can be obtained by the following Expression (20).

$$Z_j = i\frac{\omega\rho t}{\sigma_j}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_j}+i\frac{1.7\omega\rho r_j}{\sigma_j} \quad \cdots (20)$$

Synthetic acoustic impedance $Z_{MPP}$ of the micro through-hole film 12, which is defined by the following Expression (21) from the acoustic impedance $Z_1, Z_2, ..., Z_m$ (that is, $Z_j$ (j = 1, 2, ..., m) corresponding to the through-holes 14 having the obtained respective hole radii $r_j$, can be obtained.

$$Z_{MPP}=\left(\sum_{j=1}^{m}\frac{1}{Z_j}\right)^{-1} \quad \cdots (21)$$

The synthetic acoustic impedance $Z_{MPP}$ of the micro through-hole film 12 obtained as described above can be regarded as the same acoustic impedance $Z_{MPP}$ obtained by the above Expression (10). Similarly, a reflection coefficient rf and a transmission coefficient tr are obtained from the above Expression (18), and then reflectance R, transmittance T, and absorbance A can be obtained from the above Expression (19).

Furthermore, acoustic impedance Zx of a soundproof structure body in a case where one side of the back air layer is the soundproof structure and the other side is a rigid body is represented by the following Expression (21-1) obtained by adding impedance $Z_{cavity}$ of the back air layer to the above Expression (21).

$$Zx = Z_{MPP} + Z_{cavity} \ldots (21\text{-}1)$$

Here, $Z_{cavity}$ = -iρ c cot (kd), and k = 2πf/c.

Sound reflectance R in the soundproof structure body 60 disposed as shown in Fig. 9B is represented by the following Expression (21-2).

$$R = |(Z_{MPP} - Z_{air})/(Z_{MPP} + Z_{air})|^2 \ldots (21\text{-}2)$$

In the soundproof structure body 60 disposed as shown in Fig. 9B, one side of the back air layer 62 is a soundproof structure 64 formed with a micro through-hole film, and the other side is a rigid body 66. Here, an incident wave incident on the soundproof structure 64 is represented by pi, and a reflected wave emitted from the soundproof structure 64 is represented by pr.

In this case, since there is no transmitted wave, all components other than the reflected wave are absorbing components. Therefore, the absorbance A in a system of Fig. 9B is represented by the following Expression (21-3).

$$A = 1 - R \ldots (21\text{-}3)$$

In the soundproof structure 10 shown in Figs. 1 and 2, the plurality of micro through-holes 14 formed on the film-shaped member 12 have a plurality of hole radii $r_j$ (j = 1, 2, ..., m) (m is an integer of 2 or more)) and the opening ratio $\sigma_j$(j= 1, 2, ..., m)) corresponding to each of the plurality of hole radii $r_j$ as illustrated on the hole radius distribution histogram function σ(r) shown in Fig. 3 or 4.

Here, based on the hole radius histogram shown in Fig. 3, the hole radius at which the opening ratio σ is maximum can be obtained as $r_0$, and a total opening ratio $\sigma_{sum}$ of all the through-holes 14 can be obtained by the following Expression (6).

$$\sigma_{sum}=\int_0^{\infty}\sigma(r)dr \quad \cdots (6)$$

Assuming that the acoustic impedance of the micro through-hole film 12 when the obtained hole radius ro and total opening ratio $\sigma_{sum}$ are substituted into the above Expression (10) is $Z_0$, the acoustic impedance $Z_0$ can be represented by the following Expression (1).

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

Here, the acoustic impedance $Z_0$ corresponds to acoustic impedance in a case where the hole radius r has no distribution (a case where only the through-holes 14 having the hole radius $r_0$ are present in the total opening ratio $\sigma_{sum}$). In other words, the acoustic impedance $Z_0$ can be referred to as acoustic impedance of the best mode having no distribution in the hole radius r.

In the present invention, it is determined whether the obtained acoustic impedance $Z_0$ is in the region (A) or region (B) shown in Fig. 9A. That is, it is determined whether the real part $Re(Z_0)$ of the acoustic impedance is smaller than or larger than $2 \times Z_{air}$.

Here, in a case where the acoustic impedance $Z_0$ is in the region (A) of Fig. 9A, the soundproof structure 10 of the embodiment of the present invention satisfies the following Expression (2).

$$Re(Z_0) < 2 \times Z_{air} \ldots (2)$$

In this case, the soundproof structure 10 of the embodiment of the present invention needs to satisfy the following Expression (3).

$$\int_0^{r_0} \sigma(r)dr > \int_{r_0}^{\infty} \sigma(r)dr \quad \cdots (3)$$

In the present invention, it is preferable to satisfy the following Expression (22), and more preferable to satisfy the following Expression (23).

$$\int_0^{r_0} \sigma(r)dr > 2\int_{r_0}^{\infty} \sigma(r)dr \quad \cdots (22)$$

$$\int_0^{r_0} \sigma(r)dr > 3\int_{r_0}^{\infty} \sigma(r)dr \quad \cdots (23)$$

In a case where the soundproof structure 10 of the embodiment of the present invention has a large distribution (hole radius deviation) in a smaller radius than the hole radius $r_0$, for example, as represented by the hole radius distribution histogram function σ(r) shown in Fig. 3, the acoustic impedance $Z_0$ is in the region (A) of Fig. 9A. Thus, in the case where the acoustic impedance $Z_0$ is in the region (A) of Fig. 9A, for example, as shown in Fig. 3, a total opening ratio of all the through-holes 14 having a hole radius r smaller than the hole radius $r_0$ needs to be larger than a total opening ratio of all the through-holes 14 having a hole radius r larger than the hole radius $r_0$.

In the present invention, the reason why the above Expression (3) needs to be satisfied is that R ($Z_{MPP}$) is close to $2 \times Z_{air}$ as compared with a case where the above Expression (3) is not satisfied, and as a result, higher absorbance can be obtained in a case where Expression (3) is satisfied as compared with the case where Expression (3) is not satisfied.

On the other hand, in a case where the acoustic impedance $Z_0$ of the soundproof structure 10 of the embodiment of the present invention is in the region (B) of Fig. 9A, the soundproof structure 10 of the embodiment of the present invention satisfies the following Expression (4).

$$Re(Z_0) > 2 \times Z_{air} \ldots (4)$$

In this case, the soundproof structure 10 of the embodiment of the present invention needs to satisfy the following Expression (5).

$$\int_0^{r_0} \sigma(r)dr < \int_{r_0}^{\infty} \sigma(r)dr \quad \cdots (5)$$

In the present invention, it is preferable to satisfy the following Expression (24), and more preferable to satisfy the following Expression (25).

$$2\int_0^{r_0} \sigma(r)dr < \int_{r_0}^{\infty} \sigma(r)dr \quad \cdots (24)$$

$$3\int_0^{r_0}\sigma(r)dr < \int_{r_0}^{\infty}\sigma(r)dr \qquad \cdots (25)$$

In a case where the soundproof structure 10 of the embodiment of the present invention has a large distribution (hole radius deviation) in a larger radius than the hole radius $r_0$, for example, as represented by the hole radius distribution histogram function $\sigma(r)$ shown in Fig. 4, the acoustic impedance $Z_0$ is in the region (B) of Fig. 9A. Thus, in the case where the acoustic impedance $Z_0$ is in the region (B) of Fig. 9A, for example, as shown in Fig. 4, a total opening ratio of all the through-holes 14 having a hole radius r larger than the hole radius $r_0$ needs to be larger than a total opening ratio of all the through-holes 14 having a hole radius r smaller than the hole radius $r_0$.

In the present invention, the reason why the above Expression (5) needs to be satisfied is that R ($Z_{MPP}$) is close to 2 $\times$ $Z_{air}$ as compared with a case where the above Expression (5) is not satisfied, and as a result, higher absorbance can be obtained in a case where Expression (5) is satisfied as compared with the case where Expression (5) is not satisfied.

The sound absorbing mechanism in the soundproof structure of the embodiment of the present invention is presumed to change sound energy to heat energy due to friction between an inner wall surface of the through-hole and air in a case where the sound passes through the micro through-hole. This mechanism is caused by the small size of the through-hole size. Therefore, the mechanism is different from a mechanism due to resonance. A path in which sound in the air directly passes through the through-hole has a much smaller acoustic impedance than a path in which sound is converted into membrane vibration and then emitted again. Therefore, the sound more easily passes through the membrane vibration than the micro through-hole. In a case where the sound passes through the through-hole portion, the sound is concentrated from a wide area on the entire upper surface of the film-shaped member to a narrow area of the through-hole to pass through the through-hole portion. The local speed extremely increases as the sound collects in the through-hole. Since friction correlates with speed, the friction in the micro through-holes increases to be converted into heat.

In a case where the hole radius of the through-holes is small, the ratio of the edge length of the through-hole to the opening area is large. Therefore, it is thought that the friction generated at the edge portion or the inner wall surface of the through-hole can be increased. By increasing the friction in a case where the sound passes through the through-hole, the sound energy can be converted into heat energy. As a result, the sound can be absorbed.

In addition, since the soundproof structure of the embodiment of the present invention absorbs sound by friction in a case where the sound passes through the through-hole, it is possible to absorb the sound regardless of the frequency band of the sound, and absorb sound in the broad band.

The present invention is a technique that is not found in the related art and cannot be easily inferred from the related art. In addition, the present invention specifically shows a condition (inequality expression) regarding the deviation of the hole radius in the hole radius distribution histogram function for increasing the absorbance in a case where the back air layer not exists and the hole radii of the micro through-holes have the distribution. In particular, the present invention considers a magnitude relation between the real part and the imaginary part of the impedance of the micro through-hole, finds that the imaginary part is negligibly small with respect to the real part particularly in a case where the opening ratio is large, and defines the effective range for values of the effective real part of the impedance.

Thus, since the soundproof structure of the embodiment of the present invention functions as the single film-shaped member having the through-holes without a closed space on the back surface, the size can be reduced.

In addition, as described above, since the soundproof structure of the embodiment of the present invention absorbs sound by friction in a case where the sound passes through the through-hole, it is possible to absorb the sound regardless of the frequency band of the sound, and absorb sound in the broad band.

Furthermore, since there is no closed space on the back surface, air permeability can be ensured.

In addition, since through-holes are provided, light can be transmitted while being scattered.

In addition, since micro through-holes are provided to function, the flexibility in material selection is high. Therefore, the problem of contamination of the surrounding environment or the environmental performance issue can also be reduced because the material can be selected according to the environment.

The film-shaped member has micro through-holes. Accordingly, even in a case where a liquid such as water adheres to the film-shaped member, water does not block the through-hole by avoiding the through-hole due to the surface tension, so that the sound absorbing performance is hardly lowered.

In addition, since the sheet member is thin, the film-shaped member can be bent according to the disposing location.

Here, from a viewpoint of the sound absorbing performance, the hole radius of the through-hole is preferably 0.05 mm (50 $\mu$m) or less, more preferably 40 $\mu$m or less, still more preferably 35 $\mu$m or less, even more preferably 25 $\mu$m or less, most preferably 15 $\mu$m or less, on the upper limit side. This is because the ratio of the length of the edge of the through-hole contributing to friction in the through-hole to the opening area of the through-hole increases as the hole radius of the through-hole decreases and accordingly friction easily occurs. This is because, in a case where the hole radius of the through-hole becomes too large, the friction during sound passing through the through-hole becomes small and the sound absorbing performance is lowered.

Furthermore, the hole radius is preferably 0.05 μm or more, more preferably 0.25 μm or more, still more preferably 0.5 μm or more, and most preferably 2 μm or more, on the lower limit side. In a case where the average hole radius is too small, since the viscous resistance in a case where the sound passes through the through-hole is too high, the sound does not pass through the through-hole sufficiently. Therefore, even in a case where the opening ratio is increased, a sufficient sound absorption effect cannot be obtained.

The hole radius of the through-hole is calculated by imaging the surface of the film-shaped member at a magnification of 200 times from one surface of the film-shaped member using a high-resolution scanning electron microscope (SEM), selecting a predetermined range from the obtained SEM image, and reading the hole radius of the through-hole whose periphery is connected in a ring shape within the selected predetermined range. In a case of creating the hole radius histogram of the through-holes, an interval of the hole radius is determined, and then the number of through-holes within an interval range is counted. In the present invention, a hole radius interval in the hole radius histogram of the through-hole is preferably 0.1 μm to 6 μm, more preferably 0.2 μm to 5 μm, still more preferably 0.3 μm to 4 μm, and most preferably 0.4 μm to 3 μm.

The interval range of the hole radius in the hole radius histogram is determined, 100 through-holes within the interval range of the hole radius are extracted, the hole radius is read, and the average value thereof is calculated as the hole radius. In a case where the number of through-holes in a predetermined range in one SEM image is less than 100, the through-holes in another predetermined range around the periphery may be counted, or a SEM image may be newly imaged at a different position around the periphery until a total number of the through-holes reaches 100.

The hole radius in the present invention was evaluated using half of a diameter (diameter equivalent to circle) when each area of the through-hole portions is measured and replaced with a circle having the same area. That is, a shape of a hole portion of the through-hole is not limited to the approximately circular shape, so that in a case where the shape of the hole portion is a non-circular shape, the evaluation is performed using half of the diameter of the circle having the same area. Accordingly, for example, even in the case of through-holes having such a shape that two or more through-holes are integrated, these are regarded as one through-hole, and a half of the circle equivalent diameter of the through-hole is taken as the hole radius.

For these tasks, for example, all circle equivalent diameters, opening ratios, and the like can be calculated by Analyze Particles using "Image J" (https://imagej.nih.gov/ij/).

In addition, for the average opening ratio, using the high-resolution scanning electron microscope (SEM), the surface of the film-shaped member is imaged from directly thereabove at a magnification of 200 times, a through-hole portion and a non-through-hole portion are observed by performing binarization with image analysis software or the like for the field of view (20 places) of 30 mm × 30 mm of the obtained SEM photograph, a ratio (opening area/geometric area) is calculated from the sum of the opening areas of the through-holes and the area of the field of view (geometric area), and an average value in each field of view (20 places) is calculated as the average opening ratio.

Here, in the soundproof structure of the embodiment of the present invention, the plurality of through-holes may be regularly arranged, but preferably is randomly arranged. From the viewpoints of productivity of micro through-holes, robustness of sound absorption characteristics, suppression of sound diffraction, and the like, it is preferable that the through-holes are randomly arranged. Regarding sound diffraction, in a case where the through-holes are periodically arranged, a diffraction phenomenon of sound occurs according to the period of the through-hole. Accordingly, there is a concern that the sound is bent by diffraction and the traveling direction of noise is divided into a plurality of directions. Random is an arrangement state in which there is no periodicity like a complete arrangement, and the absorption effect by each through-hole appears but the sound diffraction phenomenon due to the minimum distance between through-holes does not occur.

In addition, in Example of the present invention, there is also a sample prepared by etching treatment in a roll-like continuous treatment. However, it is easier to form collectively random patterns such as surface treatment than processing for manufacturing a periodic arrangement in order for mass-production. Therefore, from viewpoints of productivity, a random arrangement is preferable.

In the present invention, the fact that the through-holes are randomly arranged is defined as follows.

In the case of the completely periodic structure, strong diffracted light appears. Even in a case where only a small part of the periodic structure is different in position, diffracted light appears due to the remaining structure. Since the diffracted light is a wave formed by superimposing scattered light beams from the basic cell of the periodic structure, interference due to the remaining structure causes the diffracted light even in a case where only a small part is disturbed. This is a mechanism of the diffracted light.

Therefore, as the number of basic cells disturbed from the periodic structure increases, the amount of scattered light that causes interference for making the intensity of diffracted light strong is reduced. As a result, the intensity of diffracted light is reduced.

Accordingly, "random" in the present invention indicates that at least 10% of all the through-holes deviate from the periodic structure. From the above discussion, in order to suppress the diffracted light, the more basic cells deviating from the periodic structure, the more desirable. For this reason, a structure in which 50% of all the through-holes is deviated is preferable, a structure in which 80% of all the through-holes is deviated is more preferable, and a structure in which 90% of all the through-holes is deviated is even more preferable.

The deviation can be verified by performing an analysis of a taken image in which five or more through-holes are included. As the number of through-holes included becomes higher, it is possible to perform the more accurate analysis. Any image can be used as long as the image is an image that can be recognized by an optical microscope and an SEM, and an image in which the positions of a plurality of through-holes can be recognized.

In a captured image, focusing on one through-hole, a distance between the one through-hole and a through-hole therearound is measured. It is assumed that the shortest distance is a1 and the second, third and fourth shortest distances are a2, a3, and a4. In a case where two or more distances of a1 to a4 are the same (for example, the matching distance is assumed to be b1), the through-hole can be determined as a hole having a periodic structure with respect to the distance b1. On the other hand, in a case where neither distances of a1 to a4 are the same, the through-hole can be determined as a through-hole deviating from the periodic structure. This work is performed for all the through-holes on the image to perform determination.

Here, the above "the same" is assumed to be the same up to the deviation of $\phi$ assuming that the hole diameter of the through-hole of interest is $\phi$. That is, it is assumed that a2 and a1 are the same in the case of the relationship of $a2 - \phi < a1 < a2 + \phi$. It is thought that this is because scattered light from each through-hole is considered for diffracted light and scattering occurs in the range of the hole diameter $\phi$.

Then, for example, the number of "through-holes having a periodic structure with respect to the distance of b1" is counted, and the ratio of the number of the through-holes having a periodic structure with respect to the distance of b1 to the number of all the through-holes on the image is calculated. Assuming that the ratio is c1, the ratio c1 is the ratio of through-holes having a periodic structure, 1 - c1 is the ratio of through-holes deviated from the periodic structure, 1 - c1 is a numerical value that determines the above-described "random". In a case where there are a plurality of distances, for example, "through-holes having a periodic structure with respect to the distance of bl" and "through-holes having a periodic structure with respect to the distance of b2", counting is separately performed for b1 and b2. Assuming that the ratio of the periodic structure with respect to the distance of b1 is c1 and the ratio of the periodic structure with respect to the distance of b2 is c2, the structure in a case where both (1 - c1) and (1 - c2) are 10% or more is "random".

On the other hand, in a case where either (1 - c1) or (1 - c2) is less than 10%, the structure has a periodic structure and is not "random". In this manner, for all of the ratios c1, c2, ..., in a case where the condition of "random" is satisfied, the structure is defined as "random".

As for the productivity, as in the above random arrangement, from the viewpoint of performing etching treatment in a large quantity, the productivity is improved by allowing variations in the hole radius. In addition, from the viewpoint of durability, the size of dirt or dust differs depending on the environment. Accordingly, assuming that through-holes having one kind of hole radius are provided, all the holes are influenced in a case where the size of the main dust almost matches the size of the through-hole. By providing through-holes having a plurality of kinds of hole radius, a device that can be applied in various environments is obtained.

By using the manufacturing method disclosed in WO2016/060037A, it is possible to form a through-hole having a maximum diameter at the inside, in which the hole radius increases inside the through-hole. Due to this shape, dust (dirt, toner, nonwoven fabric, foamed material, or the like) of about the size of the through-hole is less likely to clog the inside. Therefore, the durability of the film having through-holes is improved.

Dust larger than the diameter of the outermost surface of the through-hole does not intrude into the through-hole, while dust smaller than the diameter can pass through the through-hole as it is since the internal diameter is increased.

Considering a shape in which the inside is narrowed as the opposite shape, compared with a situation in which dust passing through the outermost surface of the through-hole is caught in an inner portion with a small diameter and the dust is left as it is, it can be seen that the shape having a maximum diameter at the inside functions advantageously in suppressing the clogging of dust.

In addition, in a shape in which one surface of the film has a maximum diameter and the inner diameter decreases approximately monotonically, such as a so-called tapered shape, in a case where dust satisfying the relationship of "maximum diameter > dust size > diameter of the other surface" enters from the side having the maximum diameter, a possibility that the internal shape functions as a slope and becomes clogged in the middle is further increased.

In addition, from the viewpoint of further increasing the friction in a case where the sound passes through the through-hole, it is preferable that the inner wall surface of the through-hole is roughened. Specifically, the surface roughness Ra of the inner wall surface of the through-hole is preferably 0.1 $\mu$m or more, more preferably 0.1 $\mu$m to 10.0 $\mu$m, and even more preferably 0.2 $\mu$m or more and 1.0 $\mu$m or less.

Here, the surface roughness Ra can be measured by measuring the inside of the through-hole with an atomic force microscope (AFM). As the AFM, for example, SPA 300 manufactured by Hitachi High-Tech Sciences Co., Ltd. can be used. The cantilever can be measured in a dynamic force mode (DFM) using the OMCL-AC200TS. Since the surface roughness of the inner wall surface of the through-hole is about several microns, it is preferable to use the AFM from the viewpoint of having a measurement range and accuracy of several microns.

In addition, it is possible to calculate the average particle diameter of protruding portions by regarding each one of the protruding portions of the unevenness in the through-hole as a particle from the SEM image in the through-hole.

Specifically, an SEM image (field of view of about 1 mm $\times$ 1 mm) captured at a magnification of 2,000 times is captured into Image J and binarized into black and white so that the protruding portion is white, and the area of each protruding portion is calculated by Analyze Particles. A circle equivalent diameter assuming a circle having the same area as the area of each protruding portion was calculated for each protruding portion, and the average value was calculated as the average particle diameter.

The average particle diameter of the protruding portion is preferably 0.1 μm or more and 10.0 μm or less, and more preferably 0.15 μm or more and 5.0 μm or less.

Here, in a simulation result, the speed in the through-hole is about $5 \times 10^{-2}$ (m/s) in a case where the sound pressure is 1 [Pa] (= 94 dB), and about $1 \times 10^{-3}$ (m/s) in a case where the sound pressure is 60 dB.

In the simulation, design is performed using an acoustic module of COMSOL ver 5.1 (COMSOL, Inc.) which is analysis software for a finite-element method. By using a thermoacoustic model in the acoustic module, it is possible to calculate the sound absorbing due to the friction between the sound wave transmitted through a fluid (including air) and the wall surface of the micro through-hole.

In a case where sound having a frequency of 2,500 Hz is absorbed, the local movement speed of a medium through which the sound wave propagates can be known from the local movement speed. From this, the movement distance was determined on the assumption that particles were vibrating in the penetration direction of the through-hole. Since the sound vibrates, the distance amplitude is a distance by which movement can be made within a half cycle. At 2,500 Hz, since one cycle is 1/2,500 seconds, half of the time can be in the same direction. The maximum movement distance (sound movement distance) in the sound wave half cycle determined from the local speed is 10 μm at 94 dB and 0.2 μm at 60 dB. Therefore, since the friction is increased by having the surface roughness of about the sound movement distance, the range of the surface roughness Ra and the range of the average particle diameter of protruding portions described above are preferable.

Here, from the viewpoint of the visibility of the through-hole, the hole radius of a plurality of through-holes formed in the film-shaped member is preferably 25 μm or less, and more preferably 15 μm or less.

Since the film-shaped member having micro through-holes, which is used in the soundproof structure according to the embodiment of the present invention, is disposed in a place visible to outsiders in the external environment, a situation in which the through-holes themselves are visible is not preferable in terms of design. Since a person is concerned that there are holes as an appearance, it is desirable that through-holes are difficult to be seen.

First, the visibility of one through-hole will be examined.

Hereinafter, a case where the resolution of human eyes is visual acuity 1 will be discussed.

The definition of visual acuity 1 is to see the one minute angle decomposed. This indicates that 87 μm can be decomposed at a distance of 30 cm. The relationship between the distance and the resolution in the case of visual acuity 1 is shown in Fig. 10.

Whether or not the through-hole is visible is strongly relevant to the visual acuity. Whether a blank space between two points and/or two line segments can be seen depends on the resolution, as the visual acuity test is performed by recognizing the gap portion of the Landolt's ring. That is, in the case of a through-hole having a hole diameter less than the resolution of the eye, the distance between the edges of the through-hole cannot be decomposed by the eyes. On the other hand, it is possible to recognize the shape of a through-hole having a hole diameter equal to or greater than the resolution of the eye.

In the case of visual acuity 1, a through-hole of 100 μm can be decomposed from a distance of 35 cm. However, a through-hole of 50 μm and a through-hole of 20 μm cannot be decomposed at a distance longer than 18 cm and 7 cm, respectively. Therefore, in a case where a person is concerned since a through-hole of 100 μm can be recognized, a through-hole of 20 μm can be used since the through-hole of 20 μm cannot be recognized unless the distance is an extremely short distance of 1/5. Therefore, a small hole diameter is advantageous to cover the through-hole. In the case of using the soundproof structure in a wall or in a car, the distance from the observer is generally several tens of centimeters. In this case, a hole diameter of about 100 μm is the boundary therebetween.

Next, light scattering caused by through-holes will be discussed. Since the wavelength of visible light is about 400 nm to 800 nm (0.4 μm to 0.8 μm), the hole diameter of several micrometers to several tens of micrometers discussed in the present invention is sufficiently larger than the optical wavelength. In this case, the cross-sectional area of scattering in visible light (amount indicating how strongly an object is scattered, the unit is an area) almost matches the geometrical cross-sectional area, that is, the cross-sectional area of the through-hole in this case. That is, it can be seen that the magnitude at which visible light is scattered is proportional to the square of the radius (half of the circle equivalent diameter) of the through-hole. Therefore, as the size of the through-hole increases, the scattering intensity of the light increases with the square of the radius of the through-hole. Since the ease of viewing of a single through-hole is proportional to the amount of scattering of light, visibility in a case where each one of through-holes is large even in a case where the average opening ratio is the same.

Finally, a difference between a random arrangement having no periodicity for the arrangement of through-holes and a periodic arrangement will be discussed. In the periodic arrangement, a light diffraction phenomenon occurs according to the period. In this case, in a case where transmitted white light, reflected white light, broad spectrum light, and the like hit, the color appears variously (for example, light diffracts and the color appear to be misaligned like a rainbow or the color is strongly reflected at a specific angle). That is, in a case of periodic arrangement of the through-holes, there is a problem that a human being is easily aware of presence of glare due to an influence of diffracted light. In addition, in a case of regular arrangement, there is a problem that the through-holes themselves are easy to visually recognize. Furthermore, the periodic arrangement is not desirable from a viewpoint of design.

On the other hand, in the case of a random arrangement, the above-described diffraction phenomena do not occur. In an aluminum film in which micro through-holes are formed, a color change due to diffracted light is not shown even though the aluminum film is seen through a fluorescent lamp. Furthermore, even in a case of being viewed in a reflective disposition, the appearance has a metallic luster equivalent to that of a normal aluminum foil, and diffraction reflection does not occur.

The thickness of the film-shaped member 12 is not particularly limited. However, it is considered that since the friction energy received in a case where sound passes through the through-hole increases as the thickness increases, the sound absorbing performance is further improved. In addition, in a case where the sheet member is extremely thin, it is difficult to handle the sheet member and the sheet member is easy to break. For this reason, it is preferable to have a thickness enough to hold the sheet member. In a case where etching or the like is used for the method of forming the through-hole, a longer manufacturing time is required as the thickness becomes larger. Therefore, from the viewpoint of productivity, it is preferable that the thickness is small.

From viewpoints of sound absorbing performance, miniaturization, and air permeability, the thickness of the film-shaped member is preferably 0.1 mm (100 $\mu$m) or less, preferably 5 $\mu$m or more, more preferably 7 $\mu$m or more, and still more preferably 10 $\mu$m or more.

Materials of the film-shaped member is not limited, and various metals such as aluminum, titanium, nickel, permalloy, 42 alloy, kovar, nichrome, copper, beryllium, phosphor bronze, brass, nickel silver, tin, zinc, iron, tantalum, niobium, molybdenum, zirconium, gold, silver, platinum, palladium, steel, tungsten, lead, and iridium; and resin materials such as polyethylene terephthalate (PET), triacetyl cellulose (TAC), polyvinyl chloride, polyethylene, polyvinyl chloride, polymethyl bentene, cycloolefin polymer (COP), polycarbonate, zeonore, polyethylene naphthalate (PEN), polypropylene, and polyimide can be used. In addition, glass materials, such as thin film glass, and fiber reinforced plastic materials, such as carbon fiber reinforced plastics (CFRP) and glass fiber reinforced plastics (GFRP), can also be used.

From viewpoints that the film vibration does not easily occur due to the thin thickness and high stiffness, and a sound absorption effect is easily obtained due to the friction in the micro through-holes, it is preferable to use the metal materials. That is, it is preferable that at least a portion having the through-hole of the film-shaped member or a main component of the film-shaped member is a metal. In a case of using rubber materials or resin materials as the material of the film-shaped member, the stiffness is low. Therefore, in a case where the thickness of the film-shaped member is not increased, the film vibration may occur and sound may be generated. However, in a case of using metal materials, the stiffness is high, so that a thin film can be used.

The metal material is more preferably nickel, copper, or iron due to the high stiffness.

In addition, from viewpoints of lightweight, easily forming micro through-holes by etching, availability, cost, and the like, aluminum is also more preferably used.

In the case of using a metal material, metal plating may be performed on the surface from the viewpoint of suppression of rust and the like.

In addition, by performing the metal plating on at least the inner surface of the through-hole, the average hole diameter of the through-holes may be adjusted to a smaller range.

By using a material that is conductive and is not charged, such as a metal material, as the material of the film-shaped member, fine dirt, dust, and the like are not attracted to the film by static electricity. Therefore, it is possible to suppress the sound absorbing performance from lowering due to clogging of the through-hole of the film-shaped member with dirt, dust, and the like.

In addition, heat resistance can be improved by using a metal material as the material of the film-shaped member. In addition, ozone resistance can be improved.

In a case where a metal material is used as the film-shaped member, it is possible to shield electric waves.

The metal material has a high reflectance with respect to radiant heat due to far infrared rays. Accordingly, in a case where the metal material is used as a material of the film-shaped member, the metal material also functions as a heat insulating material for preventing heat transfer due to radiant heat. In this case, the plurality of through-holes are formed in the film-shaped member. However, since the hole diameter of the through-hole is small, the film-shaped member functions as a reflecting film.

It is known that a structure in which a plurality of micro through-holes are opened in a metal functions as a high pass filter of a frequency. For example, a window with a metal mesh in a microwave oven has a property of transmitting visible high frequency light while shielding microwaves used for the microwave oven. In this case, assuming that the hole diameter of the through-hole is $\phi$ and the wavelength of the electromagnetic wave is $\lambda$, the window functions as a filter that does not transmit a long wavelength component satisfying the relationship of $\phi < \lambda$ and transmits a short wavelength component satisfying the relationship of $\phi > \lambda$.

Here, the response to radiant heat is considered. Radiant heat is a heat transfer mechanism in which far infrared rays are radiated from an object according to the object temperature and transmitted to other objects. From the Wien's radiation law, it is known that radiant heat in an environment of about room temperature is distributed around $\lambda$ = 10 $\mu$m and up to 3 times the wavelength (up to 30 $\mu$m) on the longer wavelength side contributes effectively to transferring heat by radiation. Considering the relationship between the hole diameter $\phi$ of the high pass filter and the wavelength $\lambda$, the component of $\lambda$ > 20 $\mu$m is strongly shielded in a case of $\phi$ = 20 $\mu$m, while the relationship of $\phi > \lambda$ is satisfied and radiant heat propagates through the through-hole in a case of $\phi$ = 50 $\mu$m. That is, since the hole diameter $\phi$ is several tens of micrometers, the propagation performance of radiant heat greatly changes depending on the difference in hole diameter $\phi$, and it can be seen that the smaller the hole diameter $\phi$, that is, the smaller the average hole diameter, the more it functions as a radiant heat cut filter. Therefore, from the viewpoint of a heat insulating material for preventing heat transfer due to radiant heat, the average hole diameter of the through-holes formed in the film-shaped member is preferably 20 $\mu$m or less.

It is possible to improve the durability of the film-shaped member by appropriately performing surface treatment (plating treatment, oxide coating treatment, surface coating (fluorine, ceramic), and the like) according to the material of the film-shaped member. For example, in a case where aluminum is used as a material of the film-shaped member, it is possible to form an oxide coating film on the surface by performing alumite treatment (anodic oxidation treatment) or boehmite treatment. By forming an oxide coating film on the surface, it is possible to improve corrosion resistance, abrasion resistance, scratch resistance, and the like. In addition, by adjusting the treatment time to adjust the thickness of the oxide coating film, it is possible to adjust the tint by optical interference.

Coloring, decoration, ornament, designing, and the like can be applied to the film-shaped member. As a method of applying these, a suitable method may be selected according to the material of the film-shaped member and the state of the surface treatment. For example, printing using an ink jet method or the like can be used. In addition, in a case where aluminum is used as a material of the film-shaped member, highly durable coloring can be performed by performing color alumite treatment. The color alumite treatment is a treatment in which alumite treatment is performed on the surface and then a dye is penetrated onto the surface and then the surface is sealed. In this manner, it is possible to obtain a film-shaped member with high designability such as the presence or absence of metallic luster and color. In addition, by performing alumite treatment after forming through-holes, an anodic oxide coating film is formed only in the aluminum portion. Therefore, decorations can be made without the dye covering the through-holes and reducing the sound absorption characteristics.

In combination with the alumite treatment, various coloring and design can be applied.

<Aluminum base material>

The aluminum base material used as a film-shaped member is not particularly limited. For example, known aluminum base materials, such as Alloy Nos.1085, 1N30, and 3003 described in JIS standard H4000, can be used. The aluminum base material is an alloy plate containing aluminum as a main component and containing a small amount of different elements.

The thickness of the aluminum base material is not particularly limited, and is preferably 5 $\mu$m to 100 $\mu$m (0.1 mm), more preferably 7 $\mu$m to 100 $\mu$m, and still more preferably 10 $\mu$m to 100 $\mu$m.

[Method of Manufacturing Soundproof Structure]

Next, a method of manufacturing a soundproof structure according to the embodiment of the present invention will be described with a case using an aluminum base material as an example.

The method of manufacturing a soundproof structure using an aluminum base material has a coating film forming step for forming a coating film containing aluminum hydroxide as a main component on the surface of the aluminum base material, a through-hole forming step for forming a through-hole by performing through-hole forming treatment after the coating film forming step, and a coating film removing step for removing the aluminum hydroxide coating film after the through-hole forming step.

By having the coating film forming step, the through-hole forming step, and the coating film removing step, it is possible to appropriately form a through-hole of 0.1 mm or less.

Next, each step of the method of manufacturing a soundproof structure will be described with reference to Figs. 11 to 15, and then each step will be described in detail.

Figs. 11 to 15 are schematic cross-sectional views showing an example of a preferred embodiment of the method of manufacturing a soundproof structure using an aluminum base material.

As shown in Figs. 11 to 15, the method of manufacturing a soundproof structure is a manufacturing method having a coating film forming step in which coating film forming treatment is performed on one main surface of an aluminum base material 11 to form an aluminum hydroxide coating film 13 (Fig. 11 and Fig. 12), a through-hole forming step in which the through-holes 14 are formed by performing electrolytic dissolution treatment after the coating film forming step so that through-holes are formed in the aluminum base material 11 and the aluminum hydroxide coating film 13 (Fig. 12 and Fig. 13), and a coating film removing step in which the aluminum hydroxide coating film 13 is removed after the through-hole forming step to manufacture the soundproof structure formed of the film-shaped member 12 and including the through-holes 14 (Fig. 13 and 14).

In the method of manufacturing a soundproof structure, it is preferable to have a surface roughening treatment step for roughening the surface of the film-shaped member 12 by performing electrochemical surface roughening treatment on the film-shaped member 12 having the through-holes 14 after the coating film removing step (Figs. 14 and 15).

Small holes are easily formed in the aluminum hydroxide coating film. Therefore, by forming through-holes by performing electrolytic dissolution treatment in the through-hole forming step after the coating film forming step for forming the aluminum hydroxide coating film, it is possible to form through-holes having an average hole diameter of 0.1 μm or more and less than 100 μm.

[Coating film forming step]

In the present invention, the coating film forming step included in the method of manufacturing a film-shaped member is a step of forming an aluminum hydroxide coating film by performing coating film forming treatment on the surface of the aluminum base material.

<Coating film forming treatment>

The above-described coating film forming treatment is not particularly limited. For example, the same treatment as the conventionally known aluminum hydroxide coating film forming treatment can be performed.

As the coating film forming treatment, for example, conditions or apparatuses described in the paragraphs of <0013> to <0026> of JP2011-201123A can be appropriately adopted.

In the present invention, the conditions of the coating film forming treatment change according to the electrolyte to be used and accordingly cannot be unconditionally determined. In general, however, it is appropriate that the electrolyte concentration is 1% to 80% by mass, the liquid temperature is 5°C to 70°C, the current density is 0.5 to 60 A/$dm^2$, the voltage is 1 to 100 V, and the electrolysis time is 1 second to 20 minutes, and these are adjusted so as to obtain a desired amount of coating film.

In the present invention, it is preferable to perform electrochemical treatment using nitric acid, hydrochloric acid, sulfuric acid, phosphoric acid, oxalic acid, or mixed acids of two or more of these acids as an electrolyte.

In the case of performing electrochemical treatment in the electrolyte containing nitric acid and hydrochloric acid, a direct current may be applied between the aluminum base material and the counter electrode, or an alternating current may be applied. In the case of applying a direct current to the aluminum base material, the current density is preferably 1 to 60 A/$dm^2$, and more preferably 5 to 50 A/$dm^2$. In the case of continuously performing the electrochemical treatment, it is preferable to perform the electrochemical treatment using a liquid power supply method for supplying electric power to the aluminum base material through the electrolyte.

In the present invention, the amount of the aluminum hydroxide coating film formed by the coating film forming treatment is preferably 0.05 to 50 g/$m^2$, and more preferably 0.1 to 10 g/$m^2$.

[Through-hole forming step]

The through-hole forming step is a step of forming through-holes by performing electrolytic dissolution treatment after the coating film forming step.

<Electrolytic dissolution treatment>

The electrolytic dissolution treatment is not particularly limited, and a direct current or an alternating current may be used, and an acidic solution may be used as the electrolyte. Among these, it is preferable to perform electrochemical treatment using at least one acid of nitric acid or hydrochloric acid, and it is more preferable to perform electrochemical treatment using mixed acids of at least one or more of sulfuric acid, phosphoric acid, or oxalic acid in addition to these acids.

In the present invention, as an acidic solution that is an electrolyte, in addition to the above-mentioned acids, electrolytes described in US4671859A, US4661219A, US4618405A, US4600482A, US4566960A, US4566958A, US4566959A, US4416972A, US4374710A, US4336113A, US4184932A, and the like can also be used.

The concentration of the acidic solution is preferably 0.1% to 2.5% by mass, and particularly preferably 0.2% to 2.0% by mass. The solution temperature of the acidic solution is preferably 20°C to 80°C, more preferably 30°C to 60°C.

As the above-described acid based aqueous solution, it is possible to use an aqueous solution of acid having a concentration of 1 to 100 g/L in which at least one of a nitric acid compound having nitrate ions, such as aluminum nitrate, sodium nitrate, and ammonium nitrate, a hydrochloric acid compound having hydrochloric acid ions, such as aluminum chloride, sodium chloride, and ammonium chloride, or a sulfuric acid compound having sulfate ions, such as aluminum sulfate, sodium sulfate, and ammonium sulfate, is added in a range of 1 g/L to saturation.

In addition, metals contained in aluminum alloys, such as iron, copper, manganese, nickel, titanium, magnesium, and silica, may be dissolved in the above-described acid based aqueous solution. Preferably, a solution obtained by adding aluminum chloride, aluminum nitrate, aluminum sulfate, or the like to an aqueous solution having an acid concentration of 0.1% to 2% by mass so that the concentration of aluminum ions is 1 to 100 g/L is preferably used.

In the electrochemical dissolution treatment, a direct current is mainly used. However, in the case of using an alternating current, the AC power supply wave is not particularly limited, and a sine wave, a rectangular wave, a trapezoidal wave, a triangular wave, and the like are used. Among these, a rectangular wave or a trapezoidal wave is preferable, and a trapezoidal wave is particularly preferable.

(Nitric acid electrolysis)

In the present invention, it is possible to easily form through-holes having an average hole diameter of 0.1 μm or more and less than 100 μm by electrochemical dissolution treatment using a nitric acid based electrolyte (hereinafter, also abbreviated as "nitric acid dissolution treatment").

Here, for the reason that it is easy to control the melting point of the through-hole formation, the nitric acid dissolution treatment is preferably an electrolytic treatment performed under the conditions that a direct current is used and the average current density is 5 A/dm$^2$ or more and the electric quantity is 50 C/dm$^2$ or more. The average current density is preferably 100 A/dm$^2$ or less, and the electric quantity is preferably 10,000 C/dm$^2$ or less.

The concentration or temperature of the electrolyte in the nitric acid electrolysis is not particularly limited, and electrolysis can be performed at 30°C to 60°C using a nitric acid electrolyte having a high concentration, for example, a nitric acid concentration of 15% to 35% by mass, or electrolysis can be performed at a high temperature, for example, 80°C or more, using a nitric acid electrolyte having a nitric acid concentration of 0.7% to 2% by mass.

In addition, electrolysis can be performed by using an electrolyte in which at least one of sulfuric acid, oxalic acid, or phosphoric acid having a concentration of 0.1% to 50% by mass is mixed in the nitric acid electrolyte.

(Hydrochloric acid electrolysis)

In the present invention, it is also possible to easily form through-holes having an average hole diameter of 1 μm or more and less than 100 μm by electrochemical dissolution treatment using a hydrochloric acid based electrolyte (hereinafter, also abbreviated as "hydrochloric acid dissolution treatment").

Here, for the reason that it is easy to control the melting point of the through-hole formation, the hydrochloric acid dissolution treatment is preferably an electrolytic treatment performed under the conditions that a direct current is used and the average current density is 5 A/dm$^2$ or more and the electric quantity is 50 C/dm$^2$ or more. The average current density is preferably 100 A/dm$^2$ or less, and the electric quantity is preferably 10,000 C/dm$^2$ or less.

The concentration or temperature of the electrolyte in the hydrochloric acid electrolysis is not particularly limited, and electrolysis can be performed at 30°C to 60°C using a hydrochloric acid electrolyte having a high concentration, for example, a hydrochloric acid concentration of 10% to 35% by mass, or electrolysis can be performed at a high temperature, for example, 80°C or more, using a hydrochloric acid electrolyte having a hydrochloric acid concentration of 0.7% to 2% by mass.

In addition, electrolysis can be performed by using an electrolyte in which at least one of sulfuric acid, oxalic acid, or phosphoric acid having a concentration of 0.1% to 50% by mass is mixed in the hydrochloric acid electrolyte.

[Coating film removing step]

The film removing step is a step of performing chemical dissolution treatment to remove the aluminum hydroxide coating film.

In the coating film removing step, for example, the aluminum hydroxide coating film can be removed by performing an acid etching treatment or an alkali etching treatment to be described later.

<Acid etching treatment>

The above-described dissolution treatment is a treatment of dissolving the aluminum hydroxide coating film using a solution that preferentially dissolves aluminum hydroxide rather than aluminum (hereinafter, referred to as "aluminum hydroxide solution").

Here, as the aluminum hydroxide solution, for example, an aqueous solution containing at least one selected from the group consisting of nitric acid, hydrochloric acid, sulfuric acid, phosphoric acid, oxalic acid, a chromium compound, a zirconium compound, a titanium compound, a lithium salt, a cerium salt, a magnesium salt, sodium silicofluoride, zinc fluoride, a manganese compound, a molybdenum compound, a magnesium compound, a barium compound, and a halogen alone is preferable.

Specifically, examples of the chromium compound include chromium oxide (III) and chromium anhydride (VI) acid.

Examples of the zirconium based compound include ammonium zirconium fluoride, zirconium fluoride, and zirconium chloride.

Examples of the titanium compound include titanium oxide and titanium sulfide.

Examples of the lithium salt include lithium fluoride and lithium chloride.

Examples of the cerium salt include cerium fluoride and cerium chloride.

Examples of the magnesium salt include magnesium sulfide.

Examples of the manganese compound include sodium permanganate and calcium permanganate.

Examples of the molybdenum compound include sodium molybdate.

Examples of the magnesium compound include magnesium fluoride pentahydrate.

Examples of the barium compound include barium oxide, barium acetate, barium carbonate, barium chlorate, barium chloride, barium fluoride, barium iodide, barium lactate, barium oxalate, barium oxalate, barium perchlorate, barium selenate, selenite barium, barium stearate, barium sulfite, barium titanate, barium hydroxide, barium nitrate, and hydrates thereof.

Among the barium compounds, barium oxide, barium acetate, and barium carbonate are preferable, and barium oxide is particularly preferable.

Examples of halogen alone include chlorine, fluorine, and bromine.

Among these, it is preferable that the aluminum hydroxide solution is an aqueous solution containing an acid, and examples of the acid include nitric acid, hydrochloric acid, sulfuric acid, phosphoric acid, and oxalic acid and a mixture of two or more acids may be used.

The acid concentration is preferably 0.01 mol/L or more, more preferably 0.05 mol/L or more, and even more preferably 0.1 mol/L or more. There is no particular upper limit, but in general it is preferably 10 mol/L or less, and more preferably 5 mol/L or less.

The dissolution treatment is performed by bringing the aluminum base material on which the aluminum hydroxide coating film is formed into contact with the solution described above. The method of contacting is not particularly limited, and examples thereof include an immersion method and a spray method. Among these, the immersion method is preferable.

The immersion treatment is a treatment of immersing an aluminum base material on which an aluminum hydroxide coating film is formed into the solution described above. Stirring during immersion treatment is preferably performed since uniform treatment is performed.

The immersion treatment time is preferably 10 minutes or more, more preferably 1 hour or more, and even more preferably 3 hours or more or 5 hours or more.

<Alkali etching treatment>

The alkali etching treatment is a treatment for dissolving the surface layer by bringing the aluminum hydroxide coating film into contact with an alkali solution.

Examples of the alkali used in the alkali solution include caustic alkali and alkali metal salts. Specifically, examples of the caustic alkali include sodium hydroxide (caustic soda) and caustic potash. Examples of the alkali metal salt include: alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonic acid salts such as sodium gluconate and potassium gluconate; and alkali metal hydrogenphosphate such as secondary sodium phosphate, secondary potassium phosphate, tertiary sodium phosphate, and tertiary potassium phosphate. Among these, a solution containing caustic alkali and a solution containing both caustic alkali and alkali metal aluminate are preferable from the viewpoint of high etching speed and low cost. In particular, an aqueous solution of sodium hydroxide is preferred.

The concentration of the alkali solution is preferably 0.1% to 50% by mass, and more preferably 0.2% to 10% by mass. In a case where aluminum ions are dissolved in the alkali solution, the concentration of aluminum ions is preferably 0.01% to 10% by mass, and more preferably 0.1% to 3% by mass. The temperature of the alkali solution is preferably 10°C to 90°C. The treatment time is preferably 1 to 120 seconds.

Examples of the method of bringing the aluminum hydroxide coating film into contact with the alkali solution include a method in which an aluminum base material having an aluminum hydroxide coating film formed thereon is made to pass through a tank containing an alkali solution, a method in which an aluminum base material having an aluminum hydroxide coating film formed thereon is immersed in a tank containing an alkali solution, and a method in which an alkali solution is sprayed onto the surface (aluminum hydroxide coating film) of an aluminum base material on which an aluminum hydroxide coating film is formed.

[Surface roughening treatment step]

In the present invention, any surface roughening treatment step which may be included in the method of manufacturing a soundproof structure is a step of roughening the front surface or the back surface of the aluminum base material by performing electrochemical roughening treatment (hereinafter, also abbreviated as "electrolytic surface roughening treatment") on the aluminum base material from which the aluminum hydroxide coating film has been removed.

In the embodiment described above, the surface roughening treatment is performed after forming through-holes. However, the present invention is not limited thereto, and through-holes may be formed after the surface roughening treatment.

In the present invention, the surface can be easily roughened by electrochemical surface roughening treatment (hereinafter, also abbreviated as "nitric acid electrolysis") using a nitric acid based electrolyte.

Alternatively, the surface can also be roughened by electrochemical surface roughening treatment (hereinafter, also abbreviated as "hydrochloric acid electrolysis") using a hydrochloric acid based electrolyte.

[Metal coating step]

In the present invention, for the reason that the average hole diameter of the through-hole formed by the above-described electrolytic dissolution treatment can be adjusted to a small range of about 0.1 μm to 20 μm, it is preferable that the method of manufacturing a soundproof structure has a metal coating step for coating a part or entirety of the surface of the aluminum base material including at least the inner wall of the through-hole with a metal other than aluminum after the coating film removing step described above.

Here, "coating a part or entirety of the surface of the aluminum base material including at least the inner wall of the through-hole with a metal other than aluminum" means that at least the inner wall of the through-hole in the entire surface of the aluminum base material including the inner wall of the through-hole is coated. The surface other than the inner wall may not be coated and may be partially or entirely coated.

In the metal coating step, for example, substitution treatment and plating treatment to be described later are performed on the aluminum base material having through-holes.

<Substitution treatment>

The above-described substitution treatment is a treatment for performing substitution plating of zinc or zinc alloy on a part or entirety of the surface of the aluminum base material including at least the inner wall of the through-hole.

Examples of the substitution plating solution include a mixed solution of sodium hydroxide of 120 g/L, zinc oxide of 20 g/L, crystalline ferric chloride of 2 g/L, Rossel salt of 50 g/L, and sodium nitrate of 1 g/L.

Commercially available Zn or Zn alloy plating solution may be used. For example, substars Zn-1, Zn-2, Zn-3, Zn-8, Zn-10, Zn-111, Zn -222, and Zn-291 manufactured by Okuno Pharmaceutical Industries can be used.

The time of immersion of the aluminum base material in such a substitution plating solution is preferably 15 seconds to 40 seconds, and the immersion temperature is preferably 20°C to 50°C.

<Plating treatment>

In a case where zinc or zinc alloy is substituted for plating on the surface of the aluminum base material by the substitution treatment described above to form a zinc coating film, for example, it is preferable to perform plating treatment in which the zinc coating film is substituted to nickel by electrolytic plating to be described later and then various metals are precipitated by electrolytic plating to be described later.

(Electroless plating treatment)

As a nickel plating solution used for the electroless plating treatment, commercially available products can be widely used. For example, an aqueous solution containing nickel sulfate of 30 g/L, sodium hypophosphite of 20 g/L, and ammonium citrate of 50 g/L can be mentioned.

In addition, examples of the nickel alloy plating solution include an Ni-P alloy plating solution in which a phosphorus compound is used as a reducing agent or an Ni-B plating solution in which a boron compound is used as a reducing agent.

The immersion time in such a nickel plating solution or nickel alloy plating solution is preferably 15 seconds to 10 minutes, and the immersion temperature is preferably 30°C to 90°C.

(Electrolytic plating treatment)

As a plating solution in the case of electroplating Cu as an example of electrolytic plating treatment, for example, a plating solution obtained by adding sulfuric acid Cu of 60 to 110 g/L, sulfuric acid of 160 to 200 g/L, and hydrochloric acid of 0.1 to 0.15 mL/L to pure water and adding Toprutina SF base WR of 1.5 to 5.0 mL/L, Toprutina SF-B of 0.5 to 2.0 mL/L, and Toprutina SF leveler of 3.0 to 10 mL/L, which are manufactured by Okuno Pharmaceutical Co., Ltd., as additives can be mentioned.

The immersion time in such a copper plating solution depends on the thickness of the Cu film and accordingly is not particularly limited. For example, in a case where a Cu film having a thickness of 2 $\mu$m is applied, immersion for about 5 minutes at a current density of 2 A/dm is preferable, and the immersion temperature is preferably 20°C to 30°C.

[Washing treatment]

In the present invention, it is preferable to perform washing after the end of each treatment step described above. Pure water, well water, tap water, and the like can be used for washing. A nipping apparatus may be used to prevent the inflow of treatment solution to the next step.

Such a soundproof structure may be manufactured by using a cut sheet-shaped aluminum base material, or may be manufactured by roll-to-roll (hereinafter, also referred to as RtoR).

As is well known, RtoR is a manufacturing method in which a raw material is pulled out from a roll on which a long raw material is wound, various treatments such as surface treatment are performed while transporting the raw material in the longitudinal direction, and the treated raw material is wound onto the roll again.

In the manufacturing method of forming through-holes in the aluminum base material as described above, it is possible to easily and efficiently form a through-hole of about 20 $\mu$m by RtoR.

In the micro through-holes manufactured on the film-shaped member by the manufacturing method as described above, the hole radius may vary. In the film-shaped member having a large number of through-holes (micro through-hole film) in which the hole radius varies, a distribution shape of the hole radius histogram distribution is caused to have a feature with respect to variation which the hole radius has, that is specifically, a deviation is given to the histogram distribution representing the hole radius distribution. Thereby, the micro through-hole film in which the acoustic impedance Zo obtained by the above Expression (1) satisfies the above Expressions (2) and (3) or satisfies the above Expressions (4) and (5) is obtained, so that absorbance can be further increased. That is, even though the micro through-hole film has a large number of through-holes in which the hole radius varies, the micro through-hole film satisfying the above Expressions (2) and (3) or the above Expressions (4) and (5) can be used as the soundproof structure of the embodiment of the present invention.. Thus, absorbance can be further increased.

Furthermore, the method of forming the through-hole is not limited to the above described method, and a micro through-hole film can be formed by using the known method as long as the micro through-hole film satisfies the above Expressions (2) and (3) or the above Expressions (4) and (5), depending on materials for forming the film-shaped member.

For example, a lithography method can be used as the through-hole forming method. In this method, a hole pattern having a desired opening ratio and a hole radius is formed by electron beam (EB) lithography or photolithography, and the resist pattern is formed on a mask by etching treatment, so that the through-hole which has the hole radius distribution satisfying the present invention can be formed.

In addition, as a method for increasing an area, for example, a dot pattern having a desired opening ratio and a hole radius is formed on a metal film by performing EB lithography or photolithography on a silicon wafer and the etching treatment is performed to form the dot pattern. Thereafter, Ni electroforming processing is performed on a silicon master, and thus an Ni film-shaped member (micro through-hole film) can be formed.

For example, in a case where a resin film such as a PET film is used as the film-shaped member, the through-hole is formed by a processing method of absorbing energy such as laser processing or a machining method of physical contact such as punching or needle processing.

The soundproof structure of the embodiment of the present invention is not limited to a soundproof structure used in various equipment such as industrial equipment, transportation equipment, and general household equipment, and can be used for various structural members requiring high sound absorbance.

The soundproof structure according to the embodiment of the present invention can be used for a fixed wall, such as a fixed partition structure (partition) that is disposed in a room of a building to partition the inside of the room, and a movable wall, such as a movable partition structure (partition) that is disposed in a room of a building to partition the inside of the room.

In this manner, by using the soundproof structure according to the embodiment of the present invention as a partition, it is possible to suitably shield sound between the partitioned spaces. In particular, in the case of a movable partition, the thin and light structure according to the embodiment of the present invention is advantageous in that the structure is easy to carry.

The soundproof structure of the embodiment of the present invention can be suitably used as a window member having light-transmitting property and air permeability.

Alternatively, the soundproof structure according to the embodiment of the present invention can also be used as a cage that surrounds an apparatus that becomes a noise source, for example, an air conditioner outdoor unit or a water heater, for noise prevention. By surrounding the noise source with the member, it is possible to absorb sound while securing heat dissipation and air permeability and accordingly to prevent noise.

In addition, the soundproof structure according to the embodiment of the present invention may be used for a pet breeding cage. By applying the member according to the embodiment of the present invention to the entire pet breeding cage or a part of the pet breeding cage, for example, by replacing one surface of the pet cage with this member, it is possible to obtain the pet cage that is lightweight and has a sound absorption effect. By using this cage, it is possible to protect the pet in the cage from outside noise, and it is possible to suppress the crying sound of the pet in the cage from leaking to the outside.

In addition to those described above, the soundproof structure according to the embodiment of the present invention can be used as the following soundproof members.

For example, as soundproof members having the soundproof structure according to the embodiment of the present invention, it is possible to mention: a soundproof member for building materials (soundproof member used as building materials); a soundproof member for air conditioning equipment (soundproof member installed in ventilation openings, air conditioning ducts, and the like to prevent external noise); a soundproof member for external opening portion (soundproof member installed in the window of a room to prevent noise from indoor or outdoor); a soundproof member for ceiling (soundproof member installed on the ceiling of a room to control the sound in the room); a soundproof member for floor (soundproof member installed on the floor to control the sound in the room); a soundproof member for internal opening portion (soundproof member installed in a portion of the inside door or sliding door to prevent noise from each room); a soundproof member for toilet (soundproof member installed in a toilet or a door (indoor and outdoor) portion to prevent noise from the toilet); a soundproof member for balcony (soundproof member installed on the balcony to prevent noise from the balcony or the adjacent balcony); an indoor sound adjusting member (soundproof member for controlling the sound of the room); a simple soundproof chamber member (soundproof member that can be easily assembled and can be easily moved); a soundproof chamber member for pet (soundproof member that surrounds a pet's room to prevent noise); amusement facilities (soundproof member installed in a game centers, a sports center, a concert hall, and a movie theater); a soundproof member for temporary enclosure for construction site (soundproof member to prevent leakage of a lot of noise around the construction site); and a soundproof member for tunnel (soundproof member installed in a tunnel to prevent noise leaking to the inside and outside the tunnel).

In the present invention, the film vibration of the film-shaped member 12 may be suppressed by laminating and disposing a frame body 16 having a plurality of hole portions 18 as a mesh structure on a surface of one side of the film-shaped member 12 as in the soundproof structure 10A shown in Fig. 16.

As shown in Fig. 16, a hole radius of the hole portion 18 of the frame body 16 is larger than a hole radius of the through-hole 14 of the film-shaped member (micro through-hole film) 12, and an opening ratio of the hole portion 18 of the frame body 16 is larger than an opening ratio of the through-hole 14 of the film-shaped member 12.

Here, in the present invention, the soundproof structure 10A has a configuration in which a resonance frequency of the film-shaped member 12 in contact with the frame body 16 is larger than an audible range.

The soundproof structure 10A including the film-shaped member 12 having the plurality of through-holes 14 is a soundproof structure obtaining broadband sound absorption characteristics. In the film-shaped member 12, the smaller the hole radius of the through-hole 14 is preferable in terms of obtaining broadband sound absorbance characteristics, for example, 0.1 mm or less is preferable. However, in a case where the film-shaped member (micro through-hole film) 12 is a thin film, resonance vibration (film vibration) of the sound wave easily occurs. Therefore, the sound absorption characteristic in the single film-shaped member is weakened in a frequency band near a resonance vibration frequency.

On the other hand, in the soundproof structure 10A of the embodiment of the present invention, a stiffness of the film-shaped member 12 of the frame body 16 is increased by disposing the frame body 16 which has a plurality of hole portions 18 having a large hole radius in contact with the film-shaped member 12. In this case, by setting the hole radius of the hole portion 18 of the frame body 16 to a hole radius in which the resonance vibration frequency of the film-shaped member 12 is higher than the audible range, a resonance vibration frequency of the film-shaped member 12 is higher than the audible range. Thereby, in the audible range, it is possible to suppress a decrease in the absorbance due to the resonance vibration.

Thus, according to the soundproof structure 10A of the embodiment of the present invention, it is possible to suppress a decrease in absorbance due to the resonance vibration. Therefore, according to the soundproof structure 10A of the embodiment of the present invention, since the film-shaped member 12 does not vibrate, it is possible to prevent a decrease in absorbance in a low frequency range.

Here, as described above, in the soundproof structure 10A of the embodiment of the present invention, the apparent stiffness of the film-shaped member is increased by disposing the frame body 16 in contact with the film-shaped member 12, and the resonance vibration frequency is set higher than the audible range. Therefore, the sound in the audible range mainly passes through the path in which the sound passes through the through-hole rather than a path through which the sound is re-emitted by the film vibration of the film-shaped member 12, and thus the sound is absorbed by the friction in a case of passing through the through-hole.

A first natural vibration frequency of the film-shaped member 12 disposed in contact with the frame body 16 is a frequency at which the sound wave causes a maximum film vibration due to the resonance phenomenon, and the sound wave is a frequency of a natural vibration mode highly transmitted at the frequency. In the soundproof structure 10A of the embodiment of the present invention, the first natural vibration frequency is determined depending on a structure having the frame body 16 and the film-shaped member 12, so that values are the same regardless of the presence or absence of the through-hole 14 drilled in the film-shaped member 12.

Furthermore, in the soundproof structure 10A of the embodiment of the present invention, since the film vibration increases at a frequency near the first natural vibration frequency, the sound absorption effect due to friction with the micro through-hole is reduced. Therefore, the soundproof structure of the embodiment of the present invention has a minimum absorbance at the first natural vibration frequency $\pm 100$ Hz.

In the example shown in Fig. 16, the soundproof structure 10A of the embodiment of the present invention has a configuration in which the frame body 16 is disposed in contact with the surface of one side of the film-shaped member 12. However, the soundproof structure is not limited thereto, and the frame body 16 may be disposed in contact with a surface of the other side of the film-shaped member 12, or the frame body 16 may be disposed in contact with both surfaces of the film-shaped member 12.

By disposing the frame body 16 on both surfaces of the film-shaped member 12 respectively, stiffness of the film-shaped member can be further increased, and the resonance vibration frequency can be further increased. Therefore, the resonance vibration frequency of the film-shaped member 12 can be easily higher than the audible range.

The two frame bodies 16 disposed on both surfaces of the film-shaped member 12 may have the same configuration or different from each other. For example, the two frame bodies 16 may have the same hole radius, opening ratio, material, or the like of the hole portion 18 or may have different hole radius, opening ratio, material, or the like of the hole portion 18.

Furthermore, although the film-shaped member 12 and the frame body 16 may be disposed in contact with each other, it is preferable to be adhered and fixed each other.

By adhering and fixing the film-shaped member 12 to the frame body 16, stiffness of the film-shaped member 12 can be further increased, and the resonance vibration frequency can be further increased. Therefore, the resonance vibration frequency of the film-shaped member 12 can be easily higher than the audible range.

An adhesive used in a case of adhering and fixing the film-shaped member 12 to the frame body 16 may be selected according to materials of the film-shaped member 12 and the frame body 16. Examples of the adhesive include an epoxy adhesive (Araldite (registered trademark) (manufactured by Nichiban Co., Ltd.)), a cyanoacrylate adhesive (Aron Alpha (registered trademark) (manufactured by Toa Gosei Co., Ltd.)), and an acrylic adhesive and the like.

Furthermore, the soundproof structure of the embodiment of the present invention may further have a configuration in which a frame body having different hole radius of the hole portion, opening ratio, or material is layered and disposed to the laminate of the film-shaped member and the frame body.

The thickness of the frame body 16 is not particularly limited as long as the stiffness of the film-shaped member 12 can be suitably increased. For example, the thickness of the frame body 16 can be set according to a specification of the film-shaped member 12, a material of the frame body 16, a hole radius of the hole portion 18, and the like. For example, the thickness of the frame body 16 is preferably 0.1 mm to 3 mm, more preferably 0.2 mm to 2 mm, and still more preferably 0.3 mm to 1 mm.

A shape of the opening cross section of the hole portion 18 of the frame body 16 is not particularly limited. For example, the shape of the opening cross section may be any other shapes including other rectangles such as rectangles, rhombuses, and parallelograms, triangles such as regular triangles, isosceles triangles, and right-angled triangles, polygons including regular-angled polygons such as regular-angled pentagons, and regular-angled hexagons, circles, and ellipses, or may be an indefinite shape. Among these, the shape of the opening cross section of the hole portion 18 is preferably the regular-angled hexagons, and the frame body 16 preferably has a so-called honeycomb structure in which the plurality of hole portions 18 having a regular-angled hexagonal cross section are arranged in close proximity. By adopting a configuration in which the frame body 16 has the honeycomb structure, the apparent stiffness of the film-shaped member 12 can be further increased, and the resonance vibration frequency can be easily higher than the audible range.

The hole radius of the hole portion 18 is set to a diameter (circle equivalent diameter) when each area of the hole portion 18 is measured and replaced with a circle having the same area.

Specifically, from viewpoints that the stiffness of the film-shaped member 12 is preferably increased, a hole radius is larger than the hole radius of the through-hole 14 of the film-shaped member 12, an effect on the path in which the sound passes through the through-hole 14 is reduced, and in terms of handling, a finger or the like is not directly touching the film-shaped member 12, the hole radius of the hole portion 18 of the frame body 16 is preferably 22 mm or less, more preferably more than 0.1 mm and 15 mm or less, and particularly preferably 1 mm to 10 mm.

In addition, from viewpoints that the stiffness of the film-shaped member 12 is preferably increased, an opening ratio is larger than the opening ratio of the through-hole 14 of the film-shaped member 12, an effect on the path in which the sound passes through the through-hole 14 is reduced, and in terms of handling, a finger or the like is not directly touching the film-shaped member 12, the opening ratio of the hole portion 18 of the frame body 16 is preferably more than 1% and 98% or less, more preferably 5% to 75%, and particularly preferably 10% to 50%.

Examples of materials for forming the frame body 16 include metal materials such as aluminum, titanium, magnesium, tungsten, iron, steel, chromium, chromium molybdenum, nichrome molybdenum, and alloys thereof; resin materials such as acrylic resin, polymethyl methacrylate, polycarbonate, polyamideimide, polyarylate, polyetherimide, polyacetal, polyether ether ketone, polyphenylene sulfide, polysulfone, polyethylene terephthalate, polybutylene terephthalate, polyimide, and triacetyl cellulose; carbon fiber reinforced plastic (CFRP); carbon fiber; glass fiber reinforced plastic (GFRP); paper; and the like.

The metal materials are preferable in terms of high durability and non-combustibility. The resin materials are preferable in terms of easy formation and transparency. Paper is preferable in terms of lightweight and inexpensive.

Among these, it is preferable to use any one of aluminum, an aluminum alloy, iron, and an iron alloy.

[Soundproof structure body]

In the soundproof structure 10A shown in Fig. 16, the film vibration of the film-shaped member 12 is suppressed by laminating and disposing the frame body 16 having the plurality of hole portions 18 as the mesh structure on the surface of one side of the film-shaped member 12 (micro through-hole film). However, the present invention is not limited thereto. As in the soundproof structure body 30 shown in Fig. 30, a configuration, in which one opening end of a frame 34 having an opening 32 may be provided on the surface of one side of the film-shaped member 12 of the soundproof structure 10 or 10A, a back plate 36 may be provided on the other opening end of the frame 34, and the opening 32 of the frame 34 closed by the back plate 36 is included as a back air layer 38 on the surface of one side of the film-shaped member 12, may be adopted. That is, the soundproof structure body 30 of the embodiment of the present invention is configured by the soundproof structure 10 and the closed back air layer on the back surface of the soundproof structure 10. The back air layer 38 is preferably configured to have the opening 32, the frame 34 in which one opening end of the opening 32 is disposed on at least one surface of the film-shaped member 12 of the soundproof structure 10, and the back plate 36 closing the other opening end of the opening 32 of the frame 34. In Fig. 30, a thickness of the back air layer 38 is represented by t.

In the soundproof structure body 30 of the embodiment of the present invention, impedance of the back air layer 38 may be used in addition to the impedance of the soundproof structure 10 by adopting such a configuration.

In the soundproof structure body 30, high sound absorbing can be realized at a broad band through frictional sound absorption on the inner wall surface of the through-hole 14 of the film-shaped member 12 of the soundproof structure 10.

Furthermore, the film-shaped member 12 and the frame 34 may be disposed in contact with each other as in a case of the film-shaped member 12 and the frame body 16, but the film-shaped member 12 and the frame 34 are preferably adhered and fixed to each other.

By adhering and fixing the film-shaped member 12 to the frame 34, the stiffness of the film-shaped member 12 can be increased and the film vibration can be suppressed as in a case of adhering the film-shaped member 12 to the frame body 16. Therefore, it is possible to avoid a decrease in the absorbance caused by the above.

An adhesive used in a case where the film-shaped member 12 and the frame 34 are adhered and fixed may be selected according to materials of the film-shaped member 12, the material of the frame 34, and the like. An adhesive similar to the adhesive adhering and fixing the film-shaped member 12 to the frame body 16 may be used as the adhesive.

The thickness of the frame 34 is not particularly limited as long as the stiffness of the film-shaped member 12 can be suitably increased. For example, the thickness can be set, depending on specifications of the film-shaped member 12, materials of the frame 34, sizes of the opening 32, and the like. For example, the thickness of the frame 34 is preferably 0.1 mm to 10 mm, more preferably 0.3 mm to 5 mm, and still more preferably 0.5 mm to 3 mm.

A shape of the opening cross section of the opening 32 of the frame 34 is not particularly limited, and the shape may be the same as a shape of the opening cross section of the hole portion 18 of the frame body 16, for example. In particular, the shape of the opening cross section of the opening 32 is preferably a regular-angled hexagon as in a case of the frame body 16, and the frame 34 preferably has a so-called honeycomb structure in which the plurality of openings 32 having a regular-angled hexagonal cross section are arranged in close proximity. Therefore, it is preferable that the back air layer 38 has a honeycomb structure. Thus, by adopting a configuration in which the frame 34 has the honeycomb structure, the apparent stiffness of the film-shaped member 12 can be further increased, and strength can be increased while maintaining a soundproof performance.

As shown in Fig. 30, a hole radius of the opening 32 of the frame 34 is larger than a hole radius of the through-hole 14 of the film-shaped member (micro through-hole film) 12 as in a case of the hole portion 18, and the opening ratio of the opening 32 of the frame 34 is larger than an opening ratio of the through-hole 14 of the film-shaped member 12.

The hole radius of the opening 32 is set to a diameter (circle equivalent diameter) when each area of the opening 32 is measured and replaced with a circle having the same area as in a case of the hole portion 18.

Specifically, from viewpoints that the stiffness of the film-shaped member 12 is preferably increased, a hole radius is larger than the hole radius of the through-hole 14 of the film-shaped member 12, and an effect on the path in which the sound passes through the through-hole 14 is reduced, the hole radius of the opening 32 of the frame 34 is preferably 20 mm or less, more preferably more than 0.1 mm and 15 mm or less, and particularly preferably 1 mm to 10 mm.

In addition, from viewpoints that the stiffness of the film-shaped member 12 is preferably increased, an opening ratio is larger than the opening ratio of the through-hole 14 of the film-shaped member 12, and an effect on the path in which the sound passes through the through-hole 14 is reduced, the opening ratio of the opening 32 of the frame 34 is preferably more than 5% and 90% or less, more preferably 10% to 75%, and particularly preferably 15% to 50%.

Examples of materials for forming the frame 34 include the same material and the like similar to the frame body 16.

The back air layer 38 on the back surface of the film-shaped member 12 of the soundproof structure 10 of the soundproof structure body 30 shown in Fig. 30 is configured by the frame 34 and the back plate 36. However, the present invention is not limited thereto, and a film-shaped member (micro through-hole film) having another soundproof structure may be used instead of the back plate 36, as in the soundproof structure body 40 shown in Fig. 31.

The soundproof structure body 40 shown in Fig. 31 has two soundproof structures 10a and 10b, and the back air layer 38 can be configured between the two soundproof structures 10a and 10b. Here, in Fig. 31, a thickness of the back air layer 38 is represented by t.

The back air layer 38 is preferably configured to have the opening 32, the frame 34 in which one opening end of the opening 32 is disposed on one surface on the film-shaped member 12a or 12b of one soundproof structure 10a or 10 b of the two soundproof structures, and the other soundproof structure 10a or 10 b of the two soundproof structures closing the other opening end of the opening 32 on the frame 34.

That is, in the soundproof structure body 40, for example, the back air layer 38 of the film-shaped member 12a of the upper soundproof structure 10a in the figure, which is disposed on one side, is configured by the opening 32 of the frame 34 closed by the film-shaped member 12b of the lower soundproof structure 10b, which is disposed on the other side. Furthermore, in the soundproof structure body 40, for example, the back air layer 38 of the film-shaped member 12b of the lower soundproof structure 10b in the figure, which is disposed on the other side, is configured by the opening 32 of the frame 34 closed by the film-shaped member 12a of the upper soundproof structure 10a, which is disposed on one side.

In the soundproof structure body 40 shown in Fig. 31, there are cases where the film-shaped member 12a of the soundproof structure 10a and the film-shaped member 12b of the soundproof structure 10b that are disposed on both sides of the frame 34 have the same thickness, and where the dispositions of the through-holes 14 are different from each other, but the present invention is not limited thereto. The thickness may be different from each other, dispositions of the through-holes may be the same, and formation materials may be the same or different from each other.

Furthermore, as in the soundproof structure body 50 shown in Fig. 32, a surface of the film-shaped member 12 of the soundproof structure body 30 shown in Fig. 30 on an opposite side of the frame 34 may be covered with a reinforcement member 52 having a large hole diameter and a large opening ratio to the extent that a sound flow is not hindered. That is, the reinforcement member 52 is preferably a member in which the plurality of through-holes 14 of the film-shaped member 12 is not blocked at all or is not blocked as much as possible to the extent that the sound flow is not hindered, and which has greater strength and bending stiffness than that of the film-shaped member 12. For example, in a case where the film-shaped member (micro through-hole film) 12 is an aluminum foil or the like, since the aluminum foil or the like is easily broken, such a configuration is effective. As the reinforcement member 52, the resins, the metals, cardboard, or the like described as the materials for forming the frame can be used.

Examples

Hereinafter, the present invention will be described in more detail by way of examples. Materials, the amount of use, ratios, processing content, processing procedures, and the like shown in the following examples can be appropriately changed without departing from the gist of the present invention. Therefore, the range of the present invention should not be interpreted restrictively by the following examples.

(Example 1)

Regarding the soundproof structure 10 of the embodiment of the present invention, which includes the micro through-hole film 12 having the hole radius histogram shown in Fig. 17, the acoustic impedance Re(Zo) was calculated for each frequency by using the above expression (1) of the acoustic impedance Zo of the micro through-hole film 12. The total opening ratio $\sigma_{sum}$ of the through-holes 14 of the soundproof structure 10 of Example 1 was set to 0.055, the hole radius ro of the maximum opening ratio σ(r) was set to 12 μm, and the size of the film-shaped member (micro through-hole film) 12 was set to 40 mm × 40 mm, and the thickness t was set to 20 μm. The acoustic impedance corresponding to each hole radius was calculated using the hole radius histogram distribution shown in Fig. 17 and the above Expression (20), and the acoustic impedance $Z_{MPP}$ synthesized in parallel was calculated using the above Expression (21). The absorbance was simulated using the $Z_{MPP}$.

Here, assuming normal distribution as variation in hole radius distribution in which the hole radius r is smaller than ro (r < ro), the standard deviation $S_L$ was set to 15 μm. In the normal distribution, since the hole radius r cannot be negative, the hole radius r was considered only positive (r > 0).

Furthermore, assuming normal distribution as variation in hole radius distribution in which the hole radius r is greater than ro (r > ro), the standard deviation $S_H$ was set to 2 μm.

The hole radius distribution histogram function σ(r) representing the opening ratio was represented by the following Expression (26).

$$\sigma(r) = \sigma_C \exp\left(-\frac{(r-r_0)^2}{2s^2}\right) \quad \cdots (26)$$

Here, s is set to s = $s_L$ in a case where r < $r_0$, and set to s = $s_H$ in a case where r > $r_0$ in the standard deviation.

Furthermore, $\sigma_C$ was a constant and set to satisfy the following Expression (27).

$$\int_0^\infty \sigma(r)dr = 0.055 \quad \cdots (27)$$

Thus, the left side (the following Expression (28)) and the right side (the following Expression (29)) in the inequality expression of the above Expression (3) were calculated using the above Expression (26) respectively. Expressions (28) and (29) were calculated by summing the opening ratio σ of the hole radius r < $r_0$ and the opening ratio σ of the hole radius

r > $r_0$.

$$\int_0^{r_0} \sigma(r)dr \quad \cdots (28)$$

$$\int_{r_0}^\infty \sigma(r)dr \quad \cdots (29)$$

The obtained results are shown in Table 1 and Fig. 22.

[Table 1]

| | Standard deviation sL [m] (r < $r_0$) | Standard deviation sH [m] (r > $r_0$) | Integral of left side of inequality expression (r < $r_0$) | Integral of right side of inequality expression (r > $r_0$) | Re (Zo) | Absorbance (1,500 Hz) | Re ($Z_{MPP}$) | IM ($Z_{MPP}$) |
|---|---|---|---|---|---|---|---|---|
| Example 1 | 1.50E-05 | 2.00E-06 | 4.56E-02 | 1.15E-02 | 377 | 0.50 | 697 | 16 |
| Comparative example 1-1 | - | - | - | - | 377 | 0.43 | 377 | 9 |
| Comparative example 1-2 | 2.00E-06 | 2.00E-06 | 3.02E-02 | 3.02E-02 | 377 | 0.43 | 368 | 10 |
| Comparative example 1-3 | 2.00E-06 | 1.50E-05 | 7.18E-03 | 4.91E-02 | 377 | 0.20 | 106 | 24 |
| Example 2 | 5.00E-07 | 2.50E-06 | 2.54E-02 | 1.89E-01 | 3682 | 0.50 | 945 | 4 |
| Comparative example 2-1 | - | - | - | - | 3682 | 0.30 | 3682 | 2 |
| Comparative example 2-2 | 5.00E-07 | 5.00E-07 | 1.40E-01 | 1.40E-01 | 3682 | 0.31 | 3465 | 2 |
| Comparative example 2-3 | 2.50E-06 | 5.00E-07 | 1.68E-01 | 7.49E-02 | 3682 | 0.23 | 5299 | 3 |

In the present Example 1, as apparent from Table 1, it can be seen that the obtained acoustic impedance Re(Zo) is 377 kg/($m^2$s), is smaller than the value 826.6 kg/(m2s) of 2 $\times$ $Z_{air}$, and the above Expression (2) is satisfied.
Furthermore, as apparent from Table 1, it can be seen that the total opening ratio $\sigma$ (integral of the left side of the inequality expression) of the hole radius r < ro represented by the above Expression (28) is greater than the total opening ratio $\sigma$ (integral of the right side of the inequality expression) of the hole radius r > ro represented by the above Expression (29), and the above Expression (3) is satisfied.
Furthermore, the absorbance is as high as 0.5 (50%).

(Comparative example 1-1)

The absorbance was simulated in the same manner as in Example 1 except that the hole radius histogram shown in Fig. 18 is corresponding to the soundproof structure which has the micro through-holes having no distribution. The hole radius r of all the through-holes was 12 $\mu$m. Strictly, all the hole radii r were within a range of 11.75 $\mu$m to 12.25 at the hole radius interval. The total opening ratio $\sigma_{sum}$ was 0.055.
The obtained results are shown in Table 1.
As apparent from Table 1, Comparative example 1-1 had the same acoustic impedance Re($Z_0$) as Example 1 and satisfied the above Expression (2), but the above Expression (3) was not satisfied, and the absorbance was 0.43 and lower than that of Example 1.

(Comparative example 1-2)

The absorbance was simulated in the same manner as in Example 1 except that the hole radius histogram shown in Fig. 19 is corresponding to the soundproof structure which has the micro through-holes having symmetrical distribution. The hole radius $r_0$ in which the opening ratio $\sigma$(r) is maximum was set to 12 $\mu$m, and the standard deviation $s_L$ for r < ro and the standard deviation $s_H$ for r > $r_0$ were 2 $\mu$m. The total opening ratio $\sigma_{sum}$ was 0.055.
The obtained results are shown in Table 1 and Fig. 22.
As apparent from Table 1, Comparative example 1-2 had the same acoustic impedance Re($Z_0$) as Example 1 and satisfied the above Expression (2), but the left and right sides of the inequality expression in Expression (3) had the same value, the above Expression (3) was not satisfied, and the absorbance was 0.43 and lower than that of Example 1.

(Comparative example 1-3)

The absorbance was simulated in the same manner as in Example 1 except that the hole radius histogram shown in Fig. 20 is corresponding to the soundproof structure which has the micro through-holes having symmetrical distribution. The hole radius ro in which the opening ratio $\sigma(r)$ is maximum was set to 12 $\mu$m, the standard deviation $s_L$ for $r < r_0$ was 2 $\mu$m, and the standard deviation $s_H$ for $r > r_0$ was 15 $\mu$m. The total opening ratio $\sigma_{sum}$ was 0.055.
The obtained results are shown in Table 1.
As apparent from Table 1, Comparative example 1-3 had the same acoustic impedance $Re(Z_0)$ as Example 1 and satisfied the above Expression (2), but the total opening ratio $\sigma$ (integral of the left side of the inequality expression) of the hole radius $r < r_0$ represented by the above Expression (28) was smaller than the total opening ratio $\sigma$ (integral of the right side of the inequality expression) of the hole radius $r > r_0$ represented by the above Expression (29) and the above Expression (3) was not satisfied, and the absorbance was 0.20 and very low as compared with Example 1.
As apparent from the above, it can be seen that in Example 1 and Comparative examples 1-1, 1-2, and 1-3,any of value of the same acoustic impedance $Re(Z_0)$ is smaller than $2 \times Z_{air}$ (about 826.6), and the above Expression (2) is satisfied. In this case, it can be seen that the absorbance is increased in a case of Example 1 in which the total opening ratio $\sigma$ (integral of the left side of the inequality expression) of the hole radius $r < r_0$ is greater than the total opening ratio $\sigma$ (integral of the right side of the inequality expression) of the hole radius $r > r_0$, and the above Expression (3) is satisfied.
From the above Example 1 and Comparative examples 1-1 to 1-3, the effectiveness of the present invention described in claim 1 of the present application was shown.

(Reference example 1)

As shown in Fig. 21, the absorbance was simulated in the same manner as in Example 1 except that the hole radius histogram is corresponding to the soundproof structure which has the micro through-holes having symmetrical distribution. The hole radius ro in which the opening ratio $\sigma(r)$ is maximum was set to 12 $\mu$m, and the total opening ratio $\sigma_{sum}$ was 0.055. The degree of change in the absorbance was examined in a case where the standard deviation $s_H$ for $r > r_0$ was fixed to 2 $\mu$m, the standard deviation $s_L$ for $r < r_0$ was further increased to be higher than the standard deviation $s_H$ and variously changed. In a case of the hole radius histogram shown in Fig. 21, the standard deviation $s_L$ is 8 $\mu$m.
The results are shown in Fig. 22.
As apparent from Fig. 22, in Comparative example 1-2 that does not satisfy the above Expression (3), the absorbance is low. In addition, from Reference example 1 to Example 1, it can be seen that the absorbance increases as the above Expression (3) is satisfied, and the total opening ratio $\sigma$ (integral of the left side of the inequality expression) of the hole radius $r < r_0$ represented by the above Expression (28) is greater than the total opening ratio $\sigma$ (integral of the right side of the inequality expression) of the hole radius r > ro represented by the above Expression (29).
It can be seen from Fig. 22 that the effectiveness of the present invention according to claim 1 of the present application is shown.

(Example 2)

Here, the constant $\sigma c$ of the hole radius distribution histogram function $\sigma(r)$ representing the opening ratio $\sigma$ represented by the above Expression (26) was set to satisfy the following Expression (30).

$$\int_0^\infty \sigma(r)dr = 0.2 \qquad \cdots (30)$$

The standard deviation $s_L$ for $r < r_0$ was set to 0.5 $\mu$m, and the standard deviation $s_H$ for $r > r_0$ was set to 2.5 $\mu$m.
In the same manner as in Example 1, the left side of the inequality expression (the following Expression (28)) and the right side of the inequality expression (the following Expression (29)) of the above Expression (5) were respectively calculated using the above Expression (26).
The obtained results are shown in Table 1 and Fig. 29.
In the present Example 2, as apparent from Table 1, it can be seen that the obtained acoustic impedance $Re(Z_0)$ is 3,682 kg/($m^2$s), is greater than the value 826.6 kg/($m^2$s) of $2 \times Z_{air}$, and the above Expression (4) is satisfied.
Furthermore, as apparent from Table 1, it can be seen that the total opening ratio $\sigma$ (integral of the left side of the inequality expression) of the hole radius r < ro represented by the above Expression (28) is smaller than the total opening ratio $\sigma$ (integral of the right side of the inequality expression) of the hole radius r > r0 represented by the above Expression (29), and the above Expression (5) is satisfied.
Furthermore, the absorbance is as high as 0.5 (50%).

(Comparative example 2-1)

The absorbance was simulated in the same manner as in Example 2 except that the hole radius histogram shown in Fig. 24 is corresponding to the soundproof structure which has the micro through-holes having no distribution. The hole radius r of all the through-holes was 2 $\mu$m. Strictly, all the hole radii r were within a range of 1.75 $\mu$m to 2.25 at the hole radius interval. The total opening ratio $\sigma_{sum}$ was 0.2.

The obtained results are shown in Table 1.

As apparent from Table 1, Comparative example 2-1 had the same acoustic impedance Re(Zo) as Example 1 and satisfied the above Expression (4), but the above Expression (5) was not satisfied, and the absorbance was 0.30 and considerably lower than that of Example 2.

(Comparative example 2-2)

The absorbance was simulated in the same manner as in Example 2 except that the hole radius histogram shown in Fig. 25 is corresponding to the soundproof structure which has the micro through-holes having symmetrical distribution. The hole radius ro in which the opening ratio $\sigma$(r) is maximum was set to 2 $\mu$m, and the standard deviation $S_L$ for r < ro and the standard deviation $S_H$ for r > ro were 0.5 $\mu$m. The total opening ratio $\sigma_{sum}$ was 0.2.

The obtained results are shown in Table 1 and Fig. 29.

As apparent from Table 1, Comparative example 2-2 had the same acoustic impedance Re(Zo) as Example 2 and satisfied the above Expression (4), but the left and right sides of the inequality in Expression (3) had the same value and the above Expression (5) was not satisfied, and the absorbance was 0.31 and considerably lower than that of Example 2.

(Comparative example 2-3)

The absorbance was simulated in the same manner as in Example 2 except that the hole radius histogram shown in Fig. 26 is corresponding to the soundproof structure which has the micro through-holes having symmetrical distribution. The hole radius ro in which the opening ratio $\sigma$(r) is maximum was set to 2 $\mu$m, the standard deviation $S_L$ for r < ro was 2.5 $\mu$m, and the standard deviation $S_H$ for r > ro was 0.5 $\mu$m. The total opening ratio $\sigma_{sum}$ was 0.2.

The obtained results are shown in Table 1.

As apparent from Table 1, Comparative example 2-3 had the same acoustic impedance Re(Zo) as Example 2 and satisfied the above Expression (4), but the total opening ratio $\sigma$ (integral of the left side of the inequality expression) of the hole radius r < r0 represented by the above Expression (28) was smaller than the total opening ratio $\sigma$ (integral of the right side of the inequality expression) of the hole radius r > r0 represented by the above Expression (29) and the above Expression (5) was not satisfied, and the absorbance was 0.23 and very low as compared with Example 2.

As apparent from the above, it can be seen that in Example 2 and Comparative examples 2-1, 2-2, and 2-3,any of value of the same acoustic impedance Re(Zo) is greater than 2 $\times$ $Z_{air}$ (about 826.6), and the above Expression (4) is satisfied. In this case, it can be seen that the absorbance is increased in a case of Example 2 in which the total opening ratio $\sigma$ (integral of the left side of the inequality expression) of the hole radius r < ro is smaller than the total opening ratio $\sigma$ (integral of the right side of the inequality expression) of the hole radius r > $r_0$, and the above Expression (5) is satisfied.

From the above Example 2 and Comparative examples 2-1 to 2-3, the effectiveness of the present invention described in claim 2 of the present application was shown.

(Reference examples 2-1 and 2-2)

As shown in Figs. 27 and 28, the absorbance was simulated in the same manner as in Example 2 except that the hole radius histogram is corresponding to the soundproof structure which has the micro through-holes having symmetrical distribution. The hole radius ro in which the opening ratio $\sigma$(r) is maximum was set to 2 $\mu$m, and the total opening ratio $\sigma_{sum}$ was 0.2. The degree of change in the absorbance was examined in a case where the standard deviation $S_L$ for r < $r_0$ was fixed to 0.5 $\mu$m, and the standard deviation $S_H$ for r > $r_0$ was further increased than the standard deviation $S_L$ and variously changed. In a case of the hole radius histograms shown in Figs. 27 and 28, each standard deviation $S_H$ is set to 1.5 $\mu$m and 1.0 $\mu$m, respectively.

The results are shown in Fig. 29.

As apparent from Fig. 29, in Comparative example 1-2 that does not satisfy the above Expression (5), the absorbance is low. In addition, from Reference example 1 to Example 1, it can be seen that the absorbance increases as the above Expression (5) is satisfied, and the total opening ratio $\sigma$ (integral of the right side of the inequality expression) of the hole radius r > ro represented by the above Expression (29) is greater than the total opening ratio $\sigma$ (integral of

the left side of the inequality expression) of the hole radius $r < r_0$ represented by the above Expression (28).

It can be seen from Fig. 29 that the effectiveness of the present invention according to claim 2 of the present application is shown.

(Example 3)

After applying a positive resist on an aluminum foil of length 25 mm × width 25 mm × thickness 20 μm, a hole radius distribution histogram was prepared by using an electron beam drawing apparatus to have a random dot shape with respect to the resist so that the result is shown in Fig. 33. Thereafter, etching treatment was performed using the resist as a mask, and then the resist was removed to prepare an aluminum film having through-holes (micro through-hole film) as a soundproof structure of the embodiment of the present invention. As acoustic characteristics of the prepared aluminum film having the through-holes, absorbance at 1,500 Hz was measured by a four-microphone method using an acoustic tube.

The results are shown in Table 2.

(Comparative example 3)

Comparative example 3 has the same configuration as in Example 3 except that the hole radius distribution histogram of the dot pattern in the aluminum film is shown in Fig. 34. Furthermore, the acoustic characteristics were measured in the same manner as in Example 3.

The results are shown in Table 2.

[Table 2]

| | Integral of left side of inequality expression (r < ro) | Integral of right side of inequality expression (r > ro) | Re ($Z_0$) | Experimental value of absorbance (1,500 Hz) |
|---|---|---|---|---|
| Example 3 | 0.03428 | 0.03151 | 301 | 0.32 |
| Comparative example 3 | 0.02931 | 0.03727 | 301 | 0.24 |

Acoustic measurement was performed as follows using an acoustic tube having an inner diameter of 8 cm.

The acoustic characteristics were measured by a transfer function method using four-microphones in an aluminum acoustic tube (tube body). This method is based on "ASTM E2611-09: Standard Test Method for Measurement of Normal Incidence Sound Transmission of Acoustical Materials Based on the Transfer Matrix Method". As the acoustic tube, for example, an aluminum tube body which has the same measurement principle with WinZac manufactured by Nittobo Acoustic Engineering Co., Ltd. was used. A cylindrical box (not shown) containing a speaker (not shown) was disposed inside the tube body, and the tube body was placed on the box (not shown). A sound having a predetermined sound pressure was output from a speaker (not shown) and measured with four microphones. It is possible to measure the sound transmission loss in a wide spectral band using this method. For example, the aluminum of Example 3 described above was disposed at a predetermined measurement site of the tube body serving as the acoustic tube, and the acoustic absorbance at 1,500 Hz was measured.

In both Example 3 and Comparative example 3, the hole radius ro in which the hole radius distribution histogram has a peak is 13.75 [μm], and the total opening ratio was $\sigma_{sum}$ = 0.053 (5.3%).

In Example 3, as apparent from Table 2, it can be seen that the obtained acoustic impedance Re(Zo) is 301 kg/($m^2$s), is smaller than the value 826.6 kg/($m^2$s) of 2 × Zair, and the above Expression (2) is satisfied.

Furthermore, it can be seen from Table 2 that the total opening ratio (corresponding to integral of the left side of the inequality expression) of the hole radius r < ro represented by the above Expression (28) is greater than the total opening ratio (corresponding to integral of the right side of the inequality expression) of the hole radius r > ro represented by the above Expression (29), and the above Expression (3) is satisfied.

It can be seen from Table 2 that the absorbance of Example 3 is higher than that of Comparative example 3 which does not satisfy the above Expression (3).

Thus, the effectiveness of the present invention was shown.

(Example 4)

The frame 34 which has the opening 32 having a thickness of 20 mm was provided to be adhered and fixed to one surface of the film-shaped member (micro through-hole film) 12 of Example 1, the back plate 36 having substantially the same size was adhered and fixed to the opened opening end of the opening 32 of the frame 34, and the opening 32 was closed, so that the soundproof structure body 30 shown in Fig. 30 was prepared. The material for forming the frame 34 was acrylic, and the thickness thereof was 1 mm. The material for forming the back plate 36 was acrylic, and the thickness thereof was 2 mm. Here, the thickness of the back air layer 38 of the film-shaped member 12 was 20 mm.

The absorbance of the soundproof structure body 30 of Example 4 prepared in this way was simulated using the above Expression (21-3) to obtain the absorbance with respect to the frequency.

The results are shown in Fig. 35.

(Comparative example 4)

A soundproof structure body having the same structure as the soundproof structure body 30 of Example 4 was prepared except that a film-shaped member was the film-shaped member of the soundproof structure of Comparative example 1-3.

The absorbance of the soundproof structure body of Comparative example 4 prepared in this way was simulated to obtain an absorbance with respect to frequency.

The results are shown in Fig. 35.

As shown in Fig. 35, it can be seen that the sound absorbance of Example 4 is higher than that of Comparative example 4.

As described above, the effectiveness of the present invention was shown.

From the above, the effect of the present invention is apparent.

As described above, the soundproof structure and the soundproof structure body according to the embodiment of the present invention have been described in detail with reference to various embodiments and examples. However, the present invention is not limited to the embodiments and examples. In addition, various improvements or changes may also be performed in a range without departing from the gist of the present invention.

Explanation of References

- 10, 10A, 10a, 10b, 64: soundproof structure
- 11: aluminum base
- 12, 12a, 12b: film-shaped member (micro through-hole film)
- 13: aluminum hydroxide coating film
- 14, 14a, 14b, 14c: through-hole
- 16: frame body
- 18: hole portion
- 20: sound absorbing model
- 22: tube body
- 30, 40, 50, 60: soundproof structure body
- 32: opening
- 34: frame
- 36: back plate
- 38, 62: back air layer
- 52: reinforcement member
- 66: rigid body

## Claims

**1.** A soundproof structure comprising:

a film-shaped member having a plurality of through-holes penetrating in a thickness direction,
wherein in a hole radius distribution histogram function $\sigma(r)$ representing an opening ratio $\sigma$ with respect to a hole radius r of the plurality of through-holes in the film-shaped member, in a case where the hole radius at which the opening ratio $\sigma$ is maximum is denoted by ro, a total opening ratio of all the through-holes is denoted by $\sigma_{sum}$, and a thickness of the film-shaped member is denoted by t, an acoustic impedance $Z_0$ of the film-shaped member represented by the following Expression (1) satisfies the following Expression (2) and the hole radius distribution histogram satisfies the following Expression (3),

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

$$\mathrm{Re}\,(Z_0) < 2 \times Z_{air} \ \ldots (2)$$

$$\int_0^{r_0}\sigma(r)dr > \int_{r_0}^{\infty}\sigma(r)dr \quad \cdots (3)$$

here, p denotes a density of air, η denotes a viscosity of air, ω denotes an angular frequency, Jo (x) and Ji (x) each denote a first kind Bessel function, i denotes an imaginary unit, $Z_{air}$ denotes an acoustic impedance of air, Re (*) denotes a real part of a complex number *, k'= $r_0\sqrt{(\rho\omega/\eta)}$, and $\sigma_{sum}$ is represented by the following Expression.

$$\sigma_{sum} = \int_0^{\infty}\sigma(r)dr$$

2. A soundproof structure comprising:

a film-shaped member having a plurality of through-holes penetrating in a thickness direction,
wherein in a hole radius distribution histogram function σ(r) representing an opening ratio σ with respect to a hole radius r of the plurality of through-holes in the film-shaped member, in a case where the hole radius at which the opening ratio σ is maximum is denoted by ro, a total opening ratio of all the through-holes is denoted by $\sigma_{sum}$, and a thickness of the film-shaped member is denoted by t, an acoustic impedance $Z_0$ of the film-shaped member represented by the following Expression (1) satisfies the following Expression (4) and the hole radius distribution histogram satisfies the following Expression (5),

$$Z_0 = i\frac{\omega\rho t}{\sigma_{sum}}\left(1-\frac{2J_1\left(k'\sqrt{-i}\right)}{k'\sqrt{-i}J_0\left(k'\sqrt{-i}\right)}\right)^{-1}+\frac{\sqrt{2\omega\rho\eta}}{2\sigma_{sum}}+i\frac{1.7\omega\rho r_0}{\sigma_{sum}} \quad \cdots (1)$$

$$\mathrm{Re}\,(Z_0) > 2 \times Z_{air} \ \ldots (4)$$

$$\int_0^{r_0}\sigma(r)dr < \int_{r_0}^{\infty}\sigma(r)dr \quad \cdots (5)$$

here, p denotes a density of air, η denotes a viscosity of air, ω denotes an angular frequency, Jo (x) and Ji (x) each denote a first kind Bessel function, i denotes an imaginary unit, $Z_{air}$ denotes an acoustic impedance of air, Re (*) denotes a real part of a complex number *, k' = ro√(ρω/η), and $\sigma_{sum}$ is represented by the following Expression.

$$\sigma_{sum} = \int_0^{\infty}\sigma(r)dr$$

3. The soundproof structure according to claim 1 or 2,
wherein the thickness t of the film-shaped member is 0.1 mm or less.

4. The soundproof structure according to any one of claims 1 to 3,
wherein the hole radius r of the plurality of through-holes is 0.05 mm or less.

5. The soundproof structure according to any one of claims 1 to 4,

wherein the plurality of through-holes are randomly arranged in the film-shaped member.

6. The soundproof structure according to any one of claims 1 to 5,
wherein at least a portion having the through-hole of the film-shaped member is formed of metal.

7. The soundproof structure according to claim 6,
wherein the metal includes nickel, copper, or iron.

8. The soundproof structure according to claim 6,
wherein the metal includes aluminum.

9. The soundproof structure according to any one of claims 1 to 8, further comprising:
a mesh structure laminated on the film-shaped member.

10. A soundproof structure body comprising:

the soundproof structure according to any one of claims 1 to 9; and
a back air layer fully closed on a back surface of the soundproof structure.

11. The soundproof structure body according to claim 10,
wherein the back air layer is configured by a honeycomb structure.

12. The soundproof structure body according to claim 10 or 11,
wherein the back air layer has an opening, and includes a frame in which one opening end of the opening is disposed on a surface of the film-shaped member of the soundproof structure, and a back plate closing the other opening end of the opening of the frame.

13. The soundproof structure body according to claim 10 or 11,
wherein two soundproof structures are provided and the back air layer is disposed between the two soundproof structures.

14. The soundproof structure body according to claim 13,
wherein the back air layer has an opening, and includes a frame in which one opening end of the opening is disposed on a surface of the film-shaped member of one soundproof structure of the two soundproof structures, and the other soundproof structure of the two soundproof structures closing the other opening end of the opening of the frame.

15. The soundproof structure body according to claim 12 or 14,
wherein the frame has a honeycomb structure.

FIG. 1

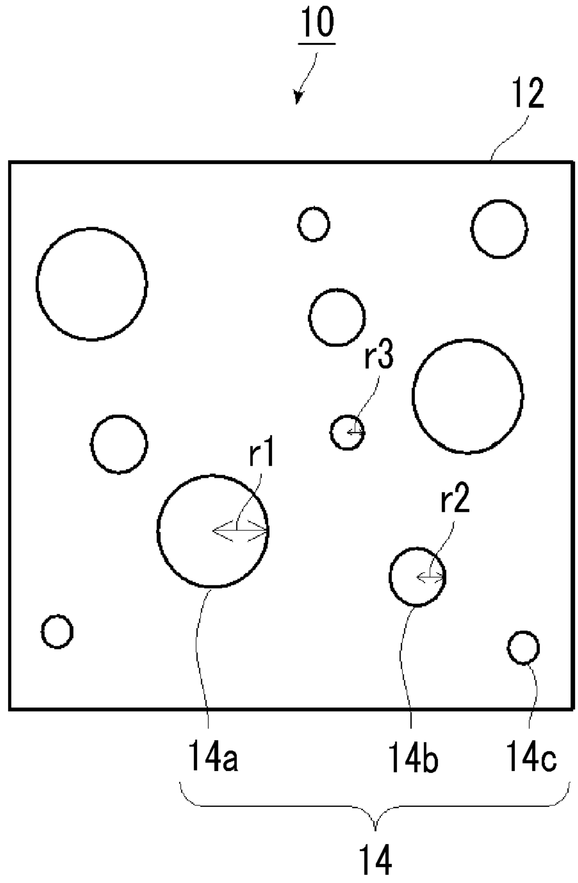


FIG. 2

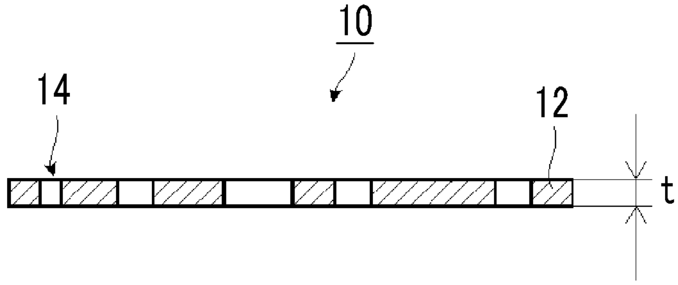

FIG. 3

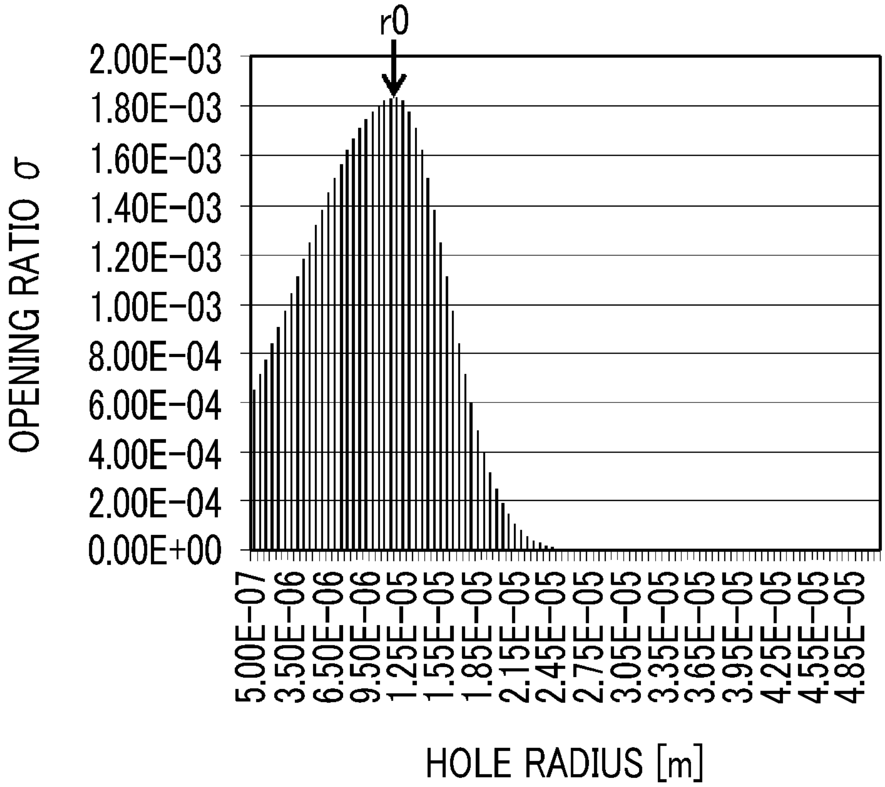
r0
OPENING RATIO σ
2.00E-03
1.80E-03
1.60E-03
1.40E-03
1.20E-03
1.00E-03
8.00E-04
6.00E-04
4.00E-04
2.00E-04
0.00E+00
5.00E-07
3.50E-06
6.50E-06
9.50E-06
1.25E-05
1.55E-05
1.85E-05
2.15E-05
2.45E-05
2.75E-05
3.05E-05
3.35E-05
3.65E-05
3.95E-05
4.25E-05
4.55E-05
4.85E-05
HOLE RADIUS [m]

FIG. 4

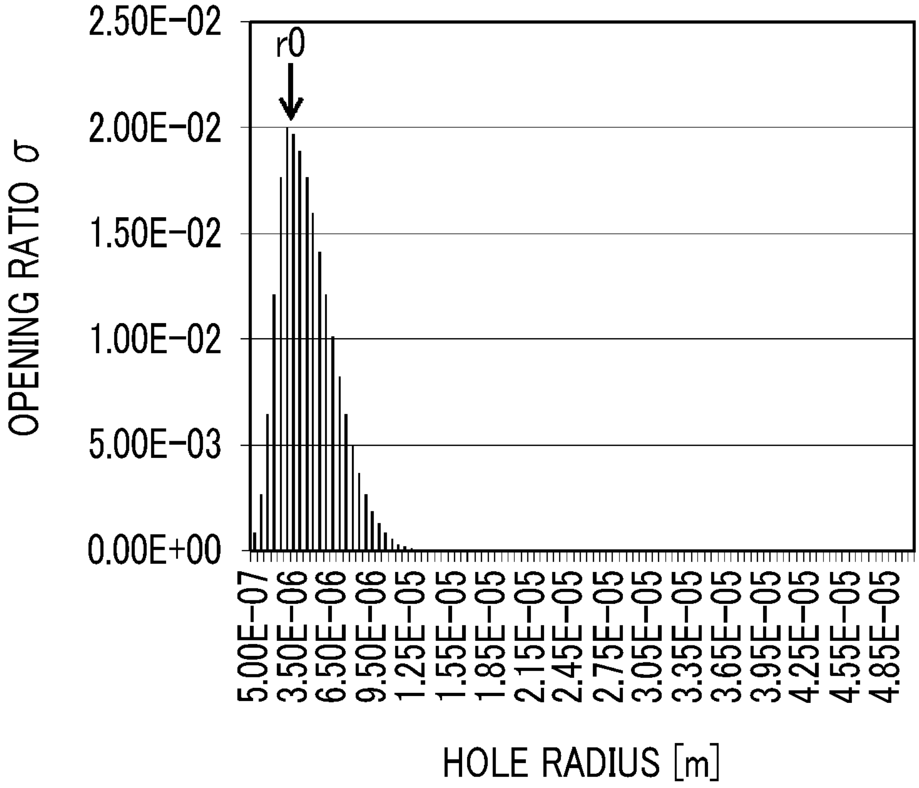
r0
OPENING RATIO σ
2.50E-02
2.00E-02
1.50E-02
1.00E-02
5.00E-03
0.00E+00
5.00E-07
3.50E-06
6.50E-06
9.50E-06
1.25E-05
1.55E-05
1.85E-05
2.15E-05
2.45E-05
2.75E-05
3.05E-05
3.35E-05
3.65E-05
3.95E-05
4.25E-05
4.55E-05
4.85E-05
HOLE RADIUS [m]

FIG. 5

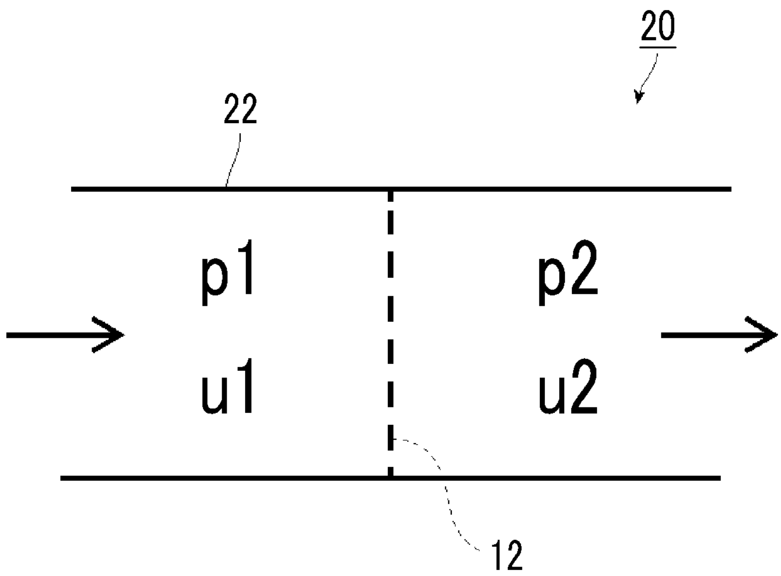
20
22
p1
u1
p2
u2
12

FIG. 6

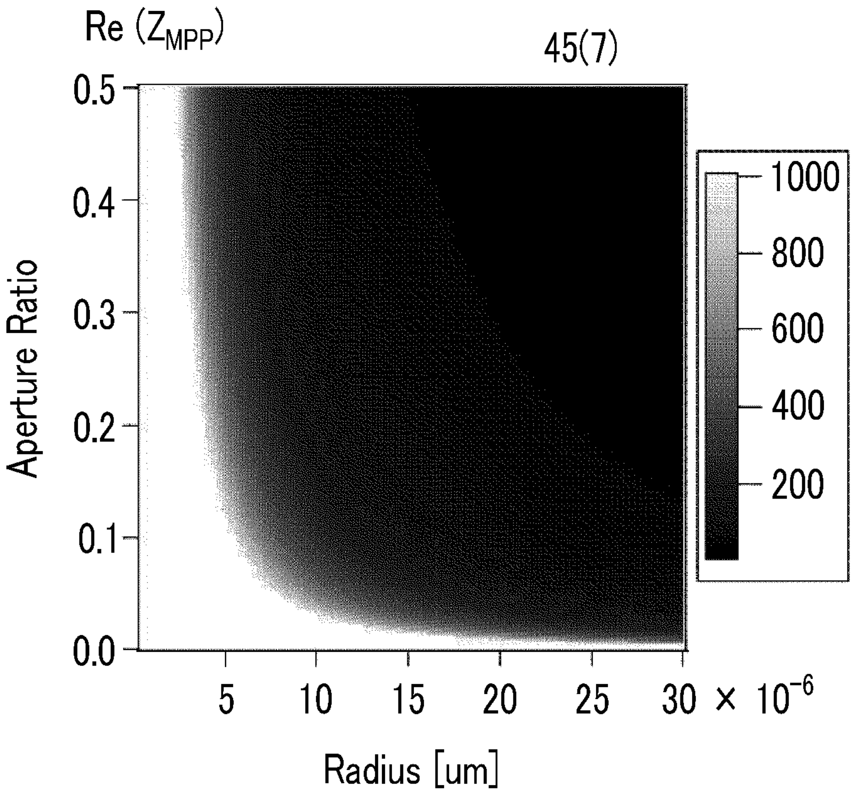
Re (Z_MPP)
45(7)
0.5
0.4
0.3
0.2
0.1
0.0
Aperture Ratio
1000
800
600
400
200
5
10
15
20
25
30 × 10^-6
Radius [um]

FIG. 7

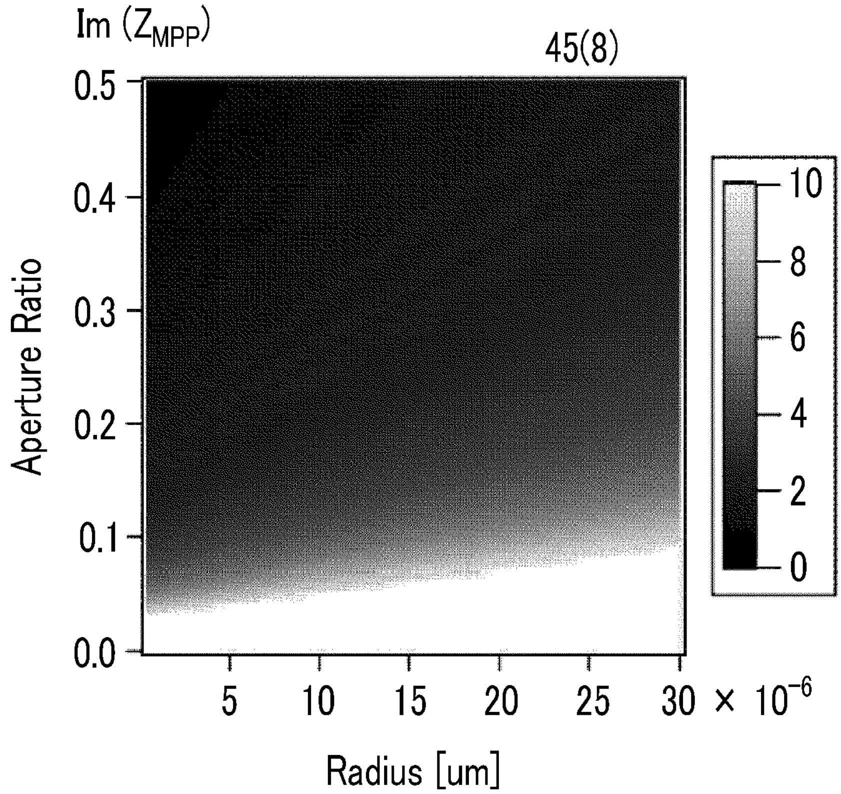
Im ($Z_{MPP}$)
45(8)
0.5
0.4
0.3
0.2
0.1
0.0
Aperture Ratio
5
10
15
20
25
30 × $10^{-6}$
Radius [um]
10
8
6
4
2
0

FIG. 8

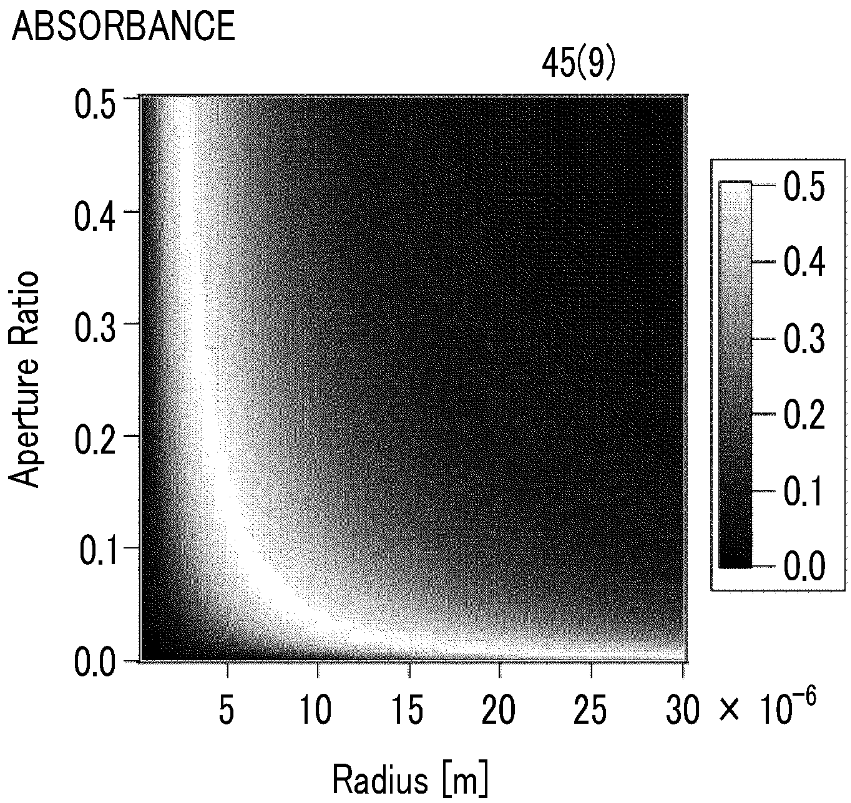
ABSORBANCE
45(9)
0.5
0.4
0.3
0.2
0.1
0.0
Aperture Ratio
5
10
15
20
25
30 × $10^{-6}$
Radius [m]
0.5
0.4
0.3
0.2
0.1
0.0

FIG. 9A

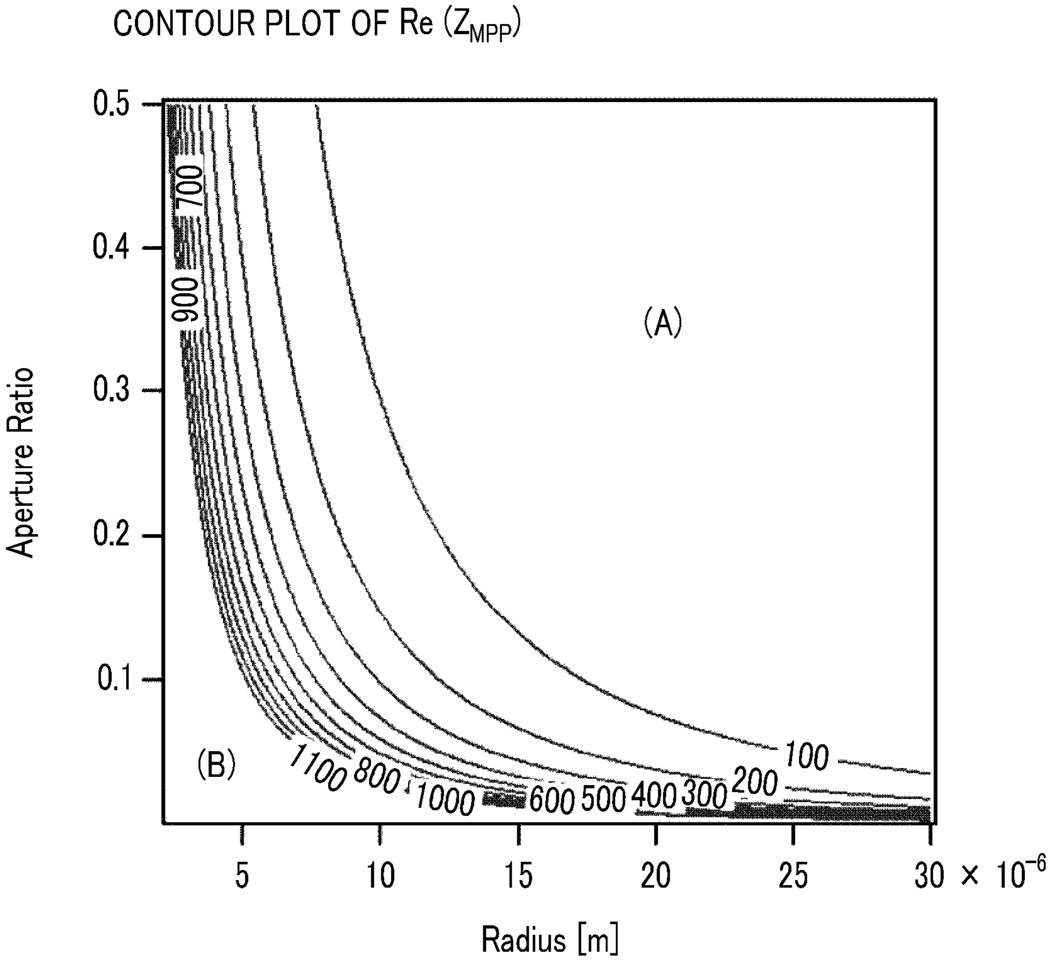
CONTOUR PLOT OF Re ($Z_{MPP}$)
0.5
0.4
0.3
0.2
0.1
Aperture Ratio
700
900
(A)
(B)
1100
800
1000
600
500
400
300
200
100
5
10
15
20
25
30 × $10^{-6}$
Radius [m]

FIG. 9B

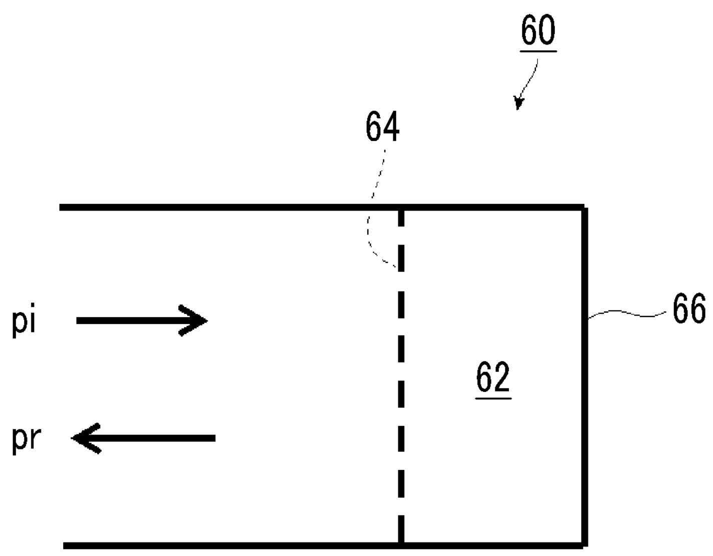
60
64
pi
pr
62
66

FIG. 10

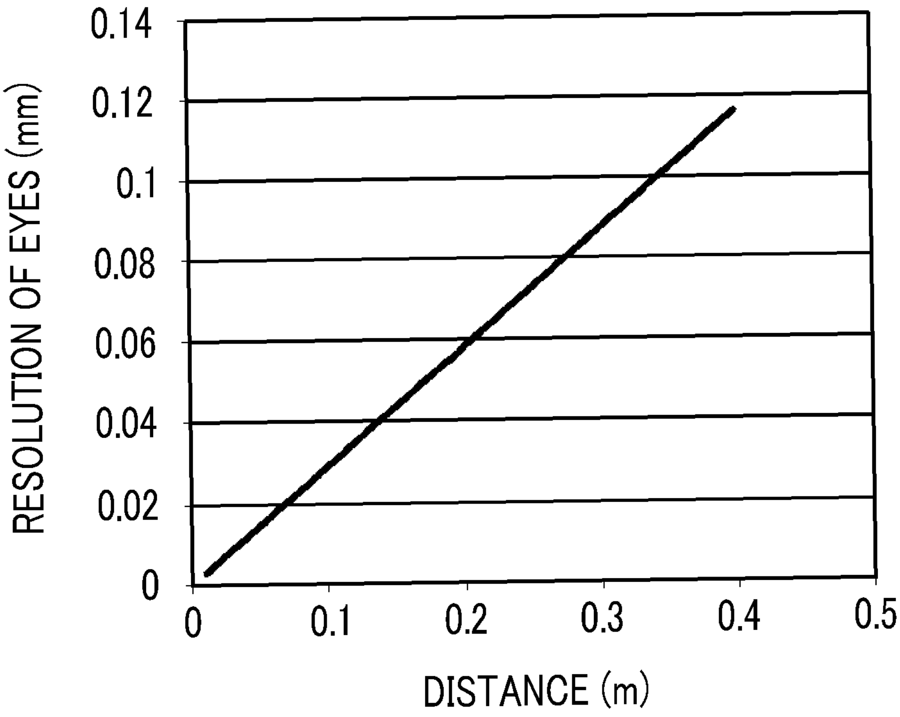


FIG. 11

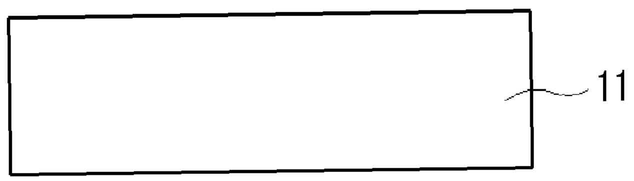


FIG. 12

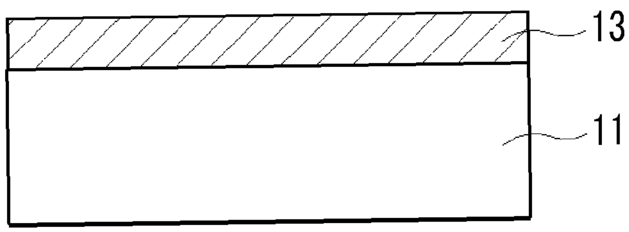

FIG. 13

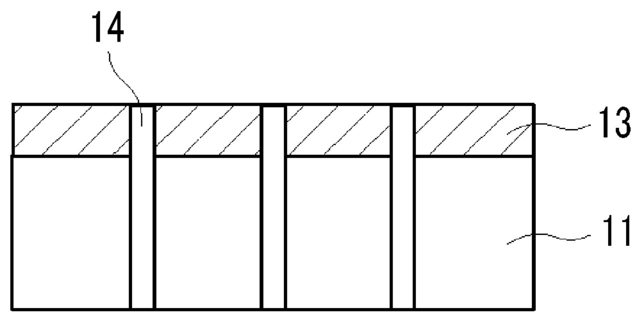


FIG. 14

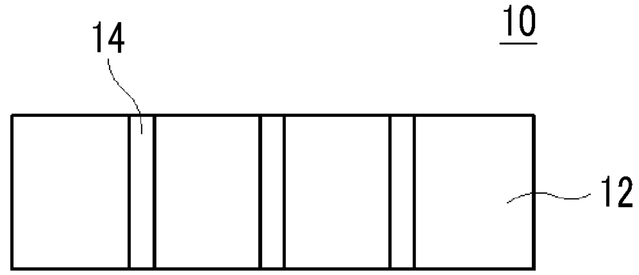


FIG. 15

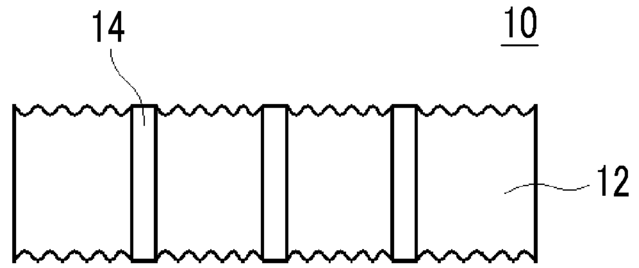


FIG. 16

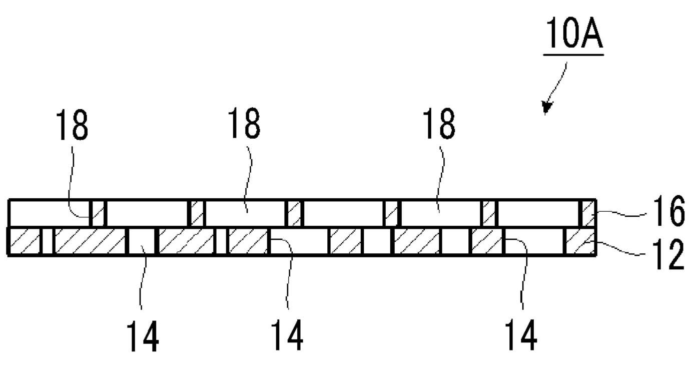

FIG. 17

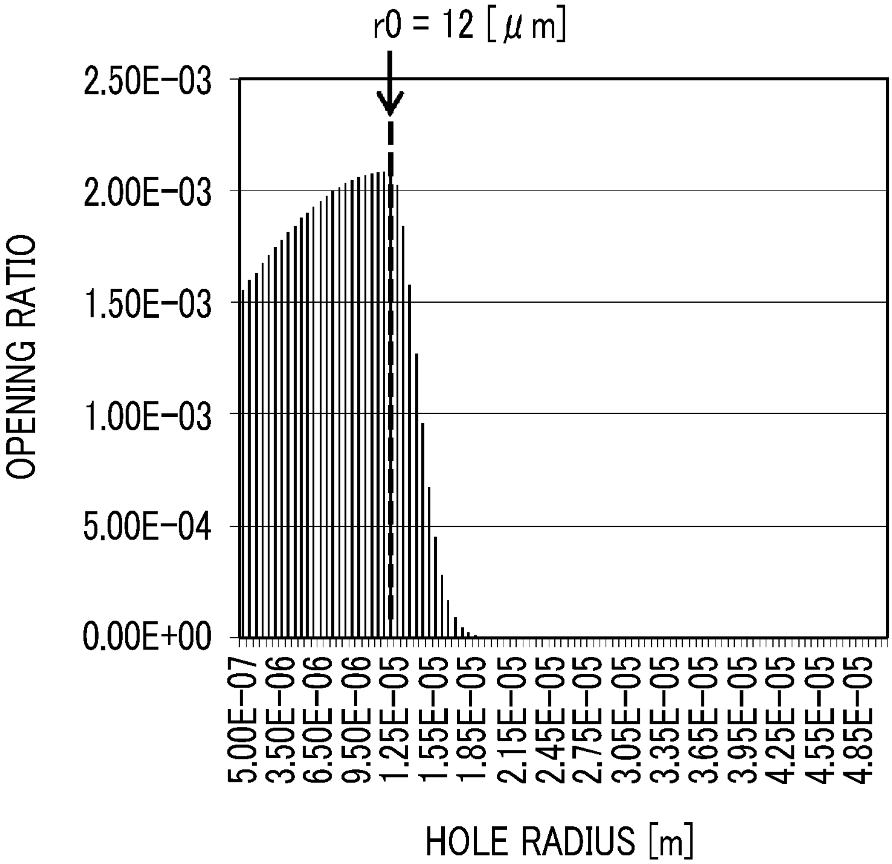
r0 = 12 [μm]
OPENING RATIO
2.50E-03
2.00E-03
1.50E-03
1.00E-03
5.00E-04
0.00E+00
5.00E-07
3.50E-06
6.50E-06
9.50E-06
1.25E-05
1.55E-05
1.85E-05
2.15E-05
2.45E-05
2.75E-05
3.05E-05
3.35E-05
3.65E-05
3.95E-05
4.25E-05
4.55E-05
4.85E-05
HOLE RADIUS [m]

FIG. 18

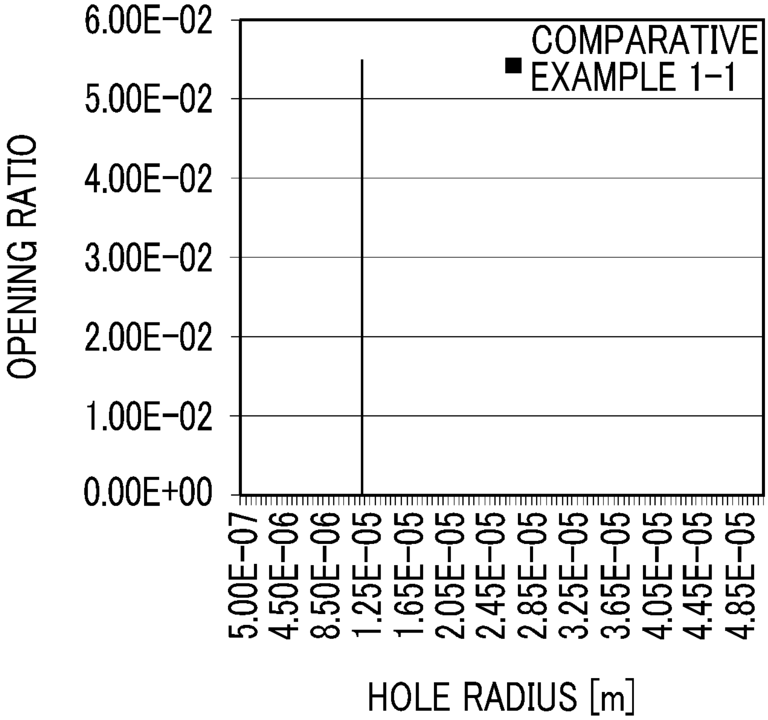
OPENING RATIO
6.00E-02
5.00E-02
4.00E-02
3.00E-02
2.00E-02
1.00E-02
0.00E+00
COMPARATIVE EXAMPLE 1-1
5.00E-07
4.50E-06
8.50E-06
1.25E-05
1.65E-05
2.05E-05
2.45E-05
2.85E-05
3.25E-05
3.65E-05
4.05E-05
4.45E-05
4.85E-05
HOLE RADIUS [m]

FIG. 19

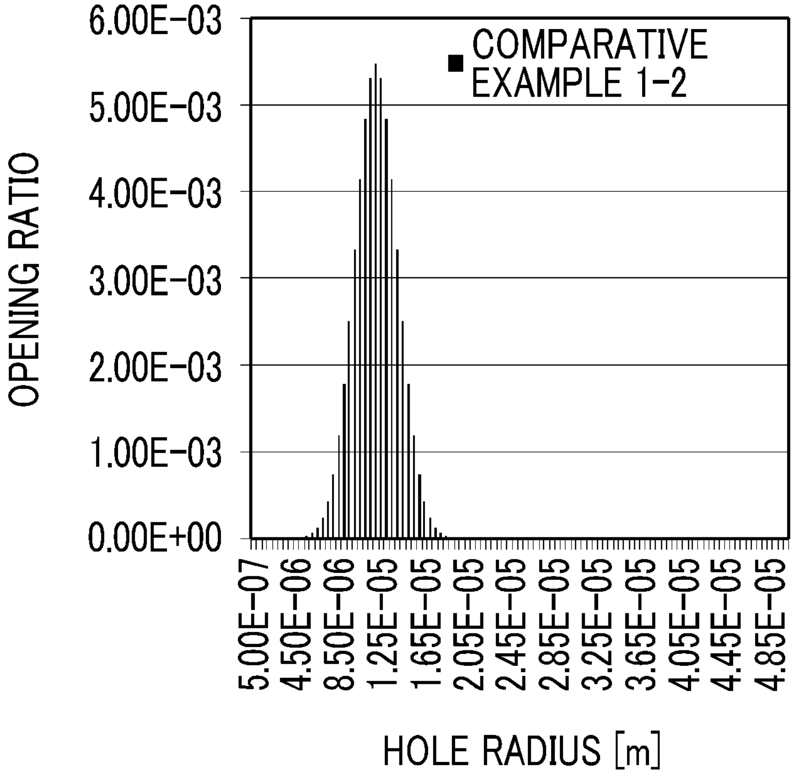
OPENING RATIO
6.00E-03
5.00E-03
4.00E-03
3.00E-03
2.00E-03
1.00E-03
0.00E+00
COMPARATIVE EXAMPLE 1-2
5.00E-07
4.50E-06
8.50E-06
1.25E-05
1.65E-05
2.05E-05
2.45E-05
2.85E-05
3.25E-05
3.65E-05
4.05E-05
4.45E-05
4.85E-05
HOLE RADIUS [m]

FIG. 20

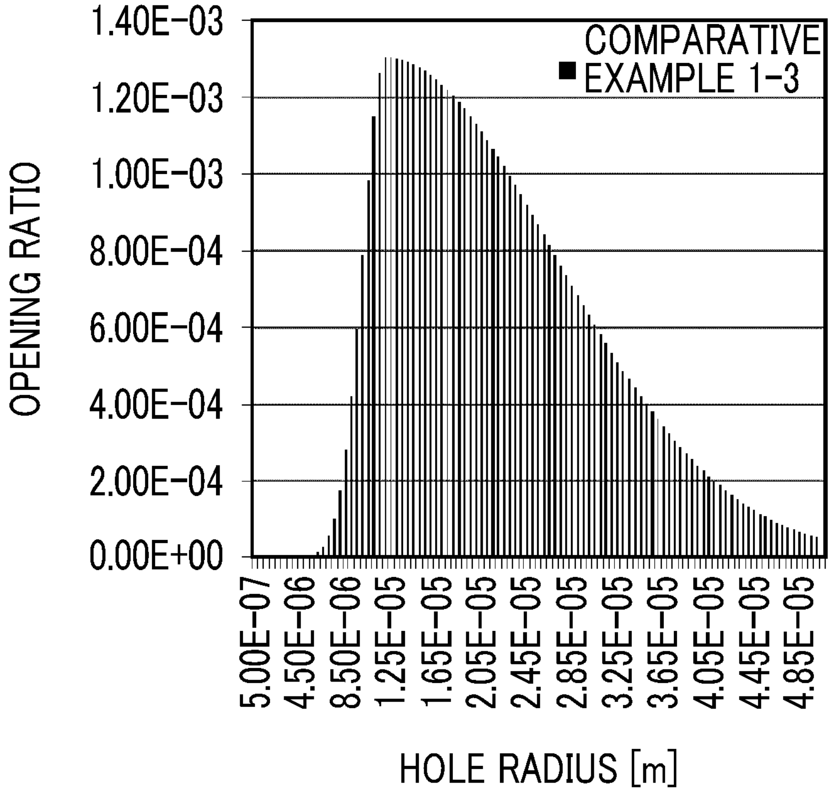
OPENING RATIO
1.40E-03
1.20E-03
1.00E-03
8.00E-04
6.00E-04
4.00E-04
2.00E-04
0.00E+00
COMPARATIVE EXAMPLE 1-3
5.00E-07
4.50E-06
8.50E-06
1.25E-05
1.65E-05
2.05E-05
2.45E-05
2.85E-05
3.25E-05
3.65E-05
4.05E-05
4.45E-05
4.85E-05
HOLE RADIUS [m]

FIG. 21

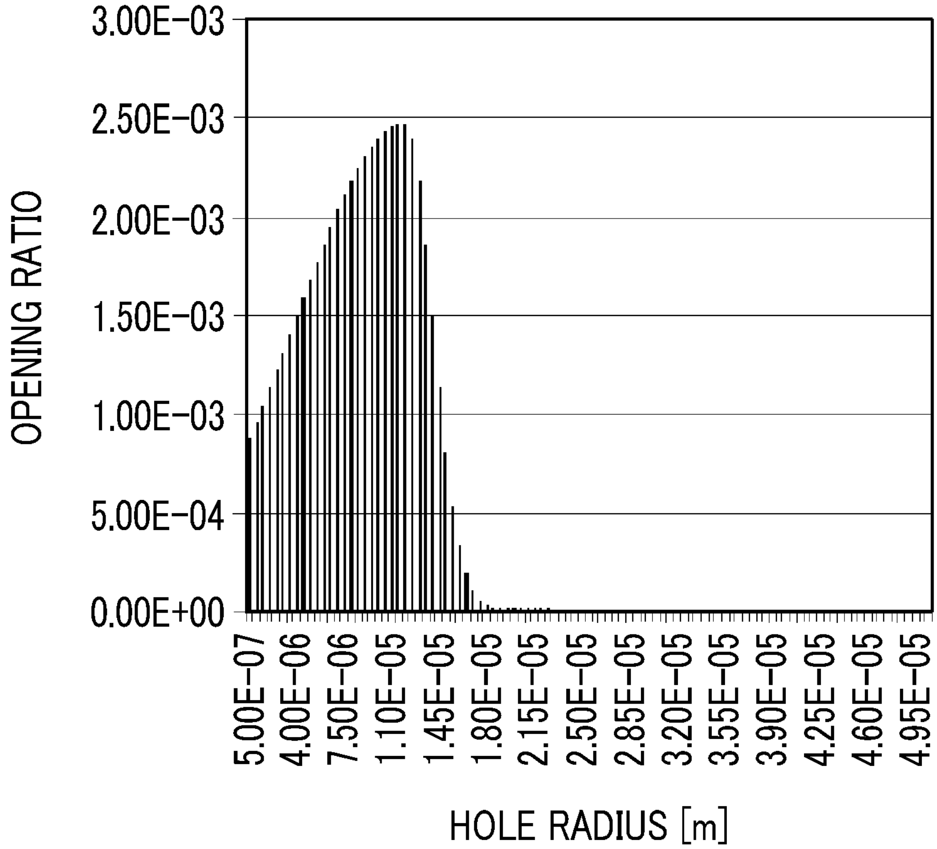
3.00E-03
2.50E-03
2.00E-03
1.50E-03
1.00E-03
5.00E-04
0.00E+00
OPENING RATIO
5.00E-07
4.00E-06
7.50E-06
1.10E-05
1.45E-05
1.80E-05
2.15E-05
2.50E-05
2.85E-05
3.20E-05
3.55E-05
3.90E-05
4.25E-05
4.60E-05
4.95E-05
HOLE RADIUS [m]

FIG. 22

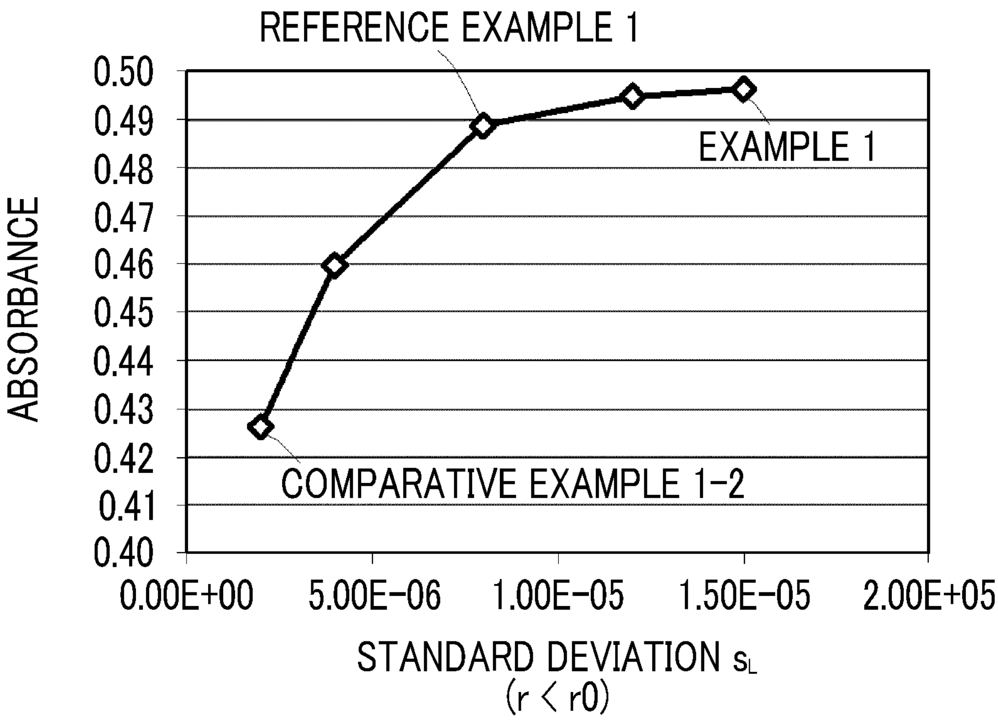
REFERENCE EXAMPLE 1
EXAMPLE 1
COMPARATIVE EXAMPLE 1-2
ABSORBANCE
0.50
0.49
0.48
0.47
0.46
0.45
0.44
0.43
0.42
0.41
0.40
0.00E+00
5.00E-06
1.00E-05
1.50E-05
2.00E+05
STANDARD DEVIATION sL
(r < r0)

FIG. 23

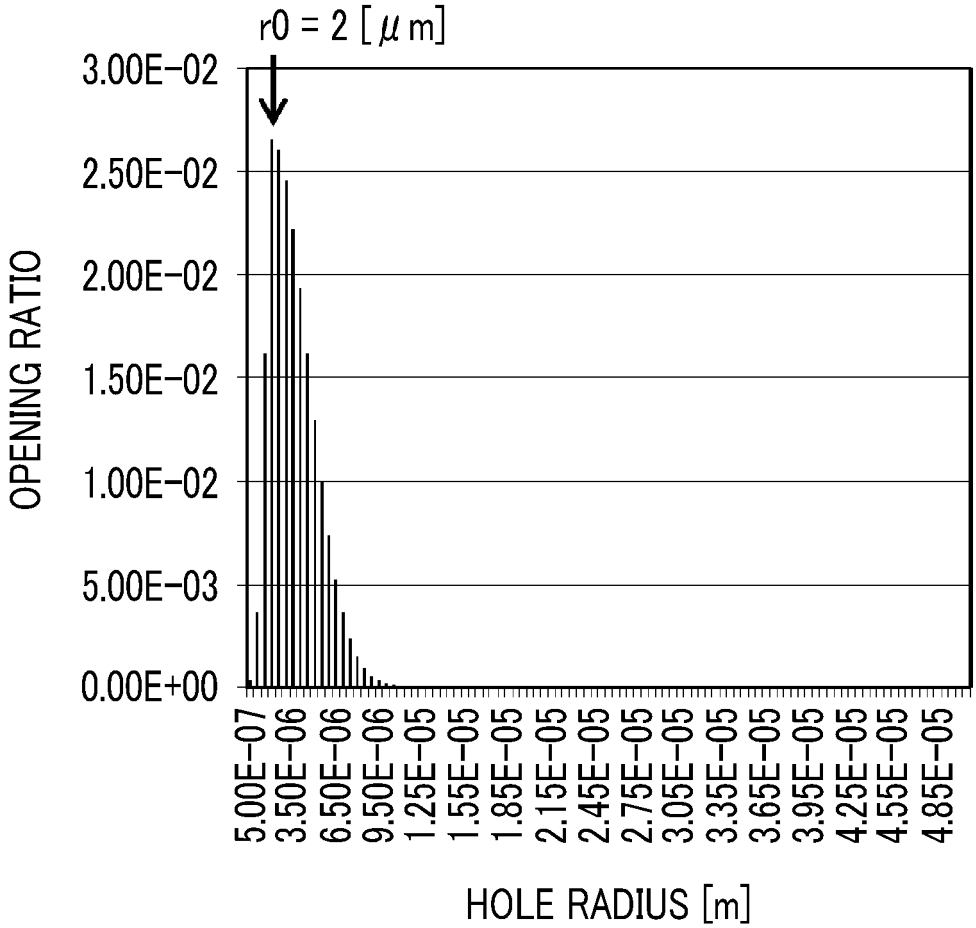
r0 = 2 [μm]
3.00E−02
2.50E−02
2.00E−02
1.50E−02
1.00E−02
5.00E−03
0.00E+00
OPENING RATIO
5.00E−07
3.50E−06
6.50E−06
9.50E−06
1.25E−05
1.55E−05
1.85E−05
2.15E−05
2.45E−05
2.75E−05
3.05E−05
3.35E−05
3.65E−05
3.95E−05
4.25E−05
4.55E−05
4.85E−05
HOLE RADIUS [m]

FIG. 24

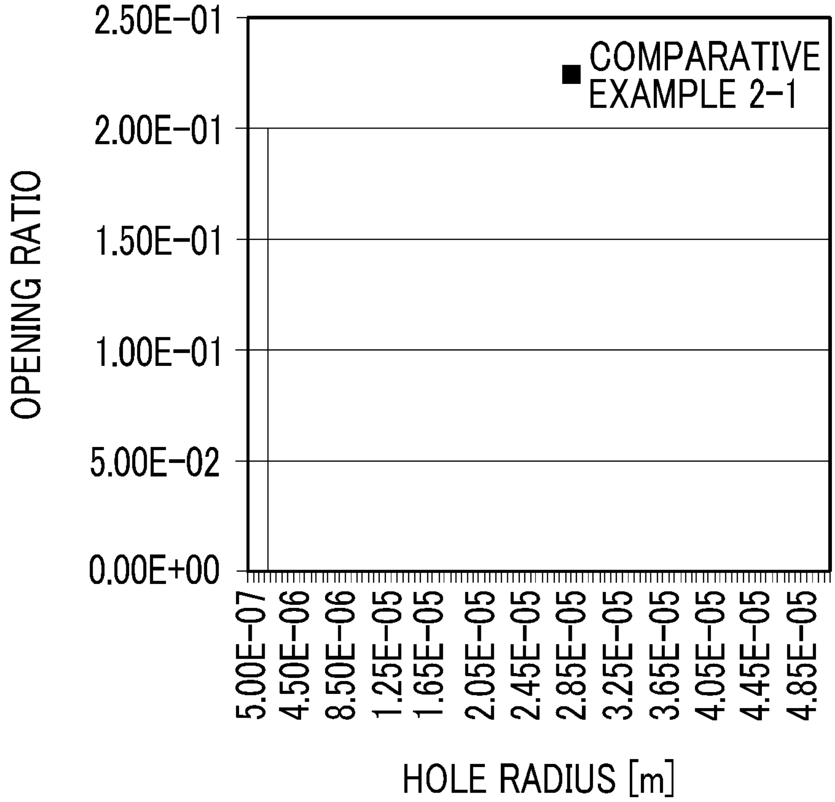
OPENING RATIO
2.50E-01
2.00E-01
1.50E-01
1.00E-01
5.00E-02
0.00E+00
COMPARATIVE EXAMPLE 2-1
5.00E-07
4.50E-06
8.50E-06
1.25E-05
1.65E-05
2.05E-05
2.45E-05
2.85E-05
3.25E-05
3.65E-05
4.05E-05
4.45E-05
4.85E-05
HOLE RADIUS [m]

FIG. 25

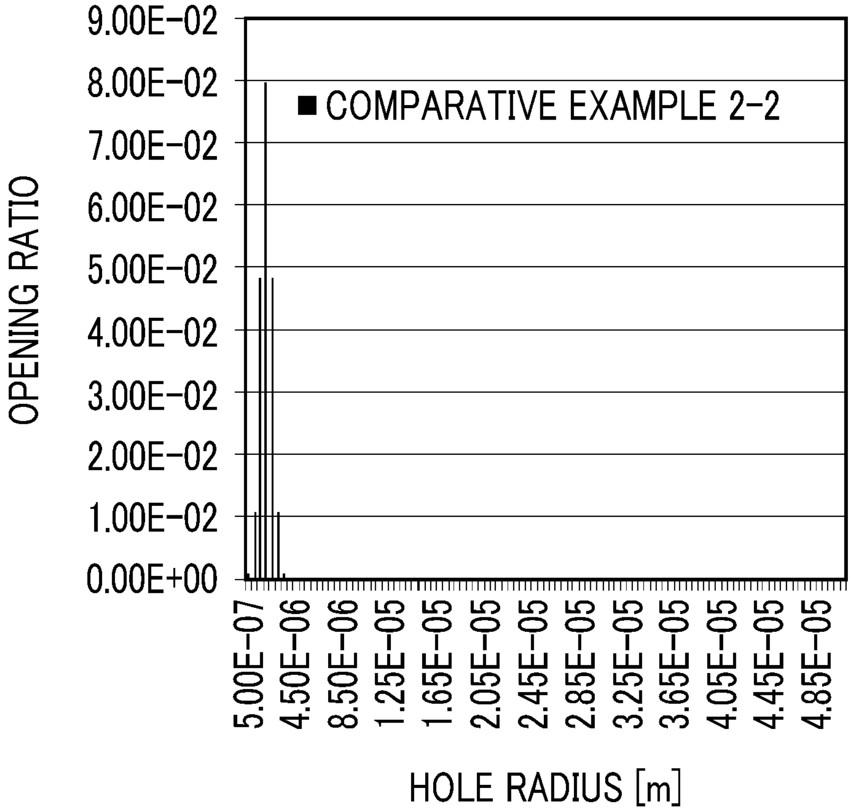
OPENING RATIO
9.00E-02
8.00E-02
7.00E-02
6.00E-02
5.00E-02
4.00E-02
3.00E-02
2.00E-02
1.00E-02
0.00E+00
COMPARATIVE EXAMPLE 2-2
5.00E-07
4.50E-06
8.50E-06
1.25E-05
1.65E-05
2.05E-05
2.45E-05
2.85E-05
3.25E-05
3.65E-05
4.05E-05
4.45E-05
4.85E-05
HOLE RADIUS [m]

FIG. 26

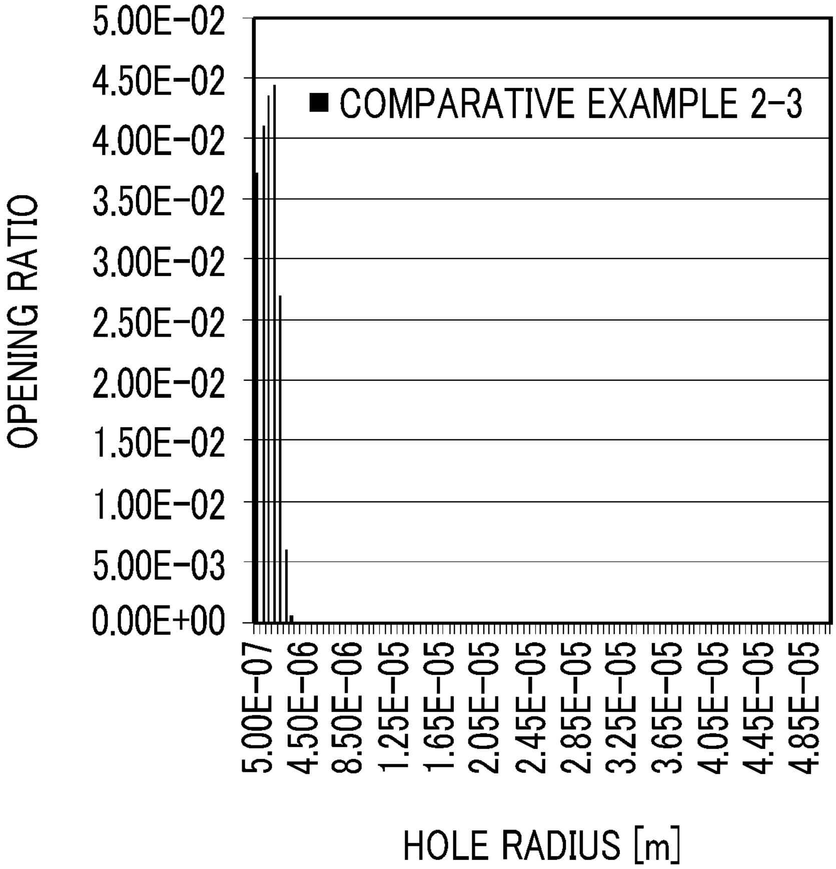

OPENING RATIO
5.00E-02
4.50E-02
4.00E-02
3.50E-02
3.00E-02
2.50E-02
2.00E-02
1.50E-02
1.00E-02
5.00E-03
0.00E+00
COMPARATIVE EXAMPLE 2-3
5.00E-07
4.50E-06
8.50E-06
1.25E-05
1.65E-05
2.05E-05
2.45E-05
2.85E-05
3.25E-05
3.65E-05
4.05E-05
4.45E-05
4.85E-05
HOLE RADIUS [m]


FIG. 27

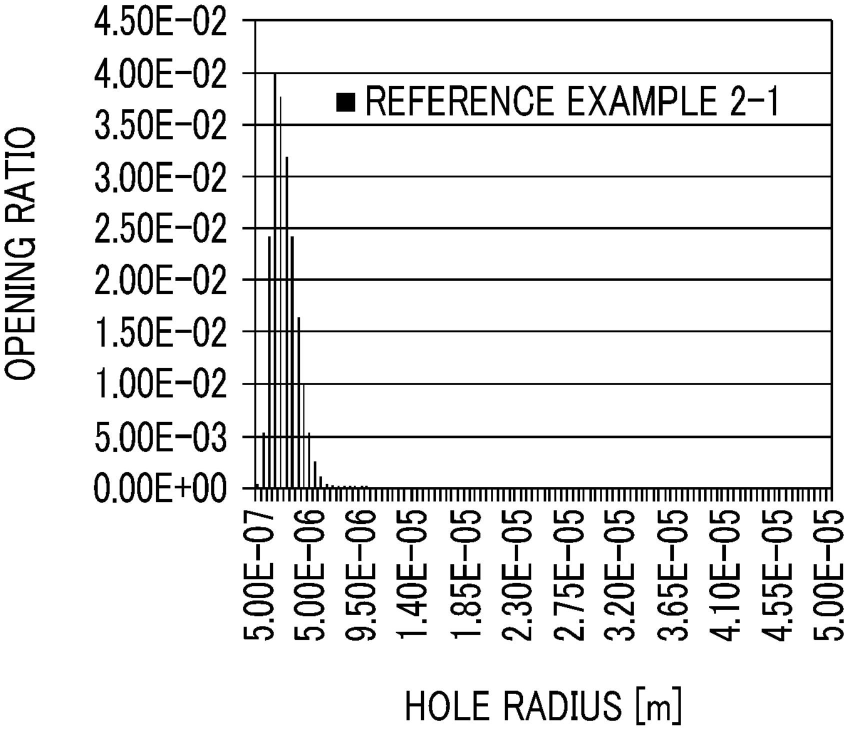

OPENING RATIO
4.50E-02
4.00E-02
3.50E-02
3.00E-02
2.50E-02
2.00E-02
1.50E-02
1.00E-02
5.00E-03
0.00E+00
REFERENCE EXAMPLE 2-1
5.00E-07
5.00E-06
9.50E-06
1.40E-05
1.85E-05
2.30E-05
2.75E-05
3.20E-05
3.65E-05
4.10E-05
4.55E-05
5.00E-05
HOLE RADIUS [m]

FIG. 28

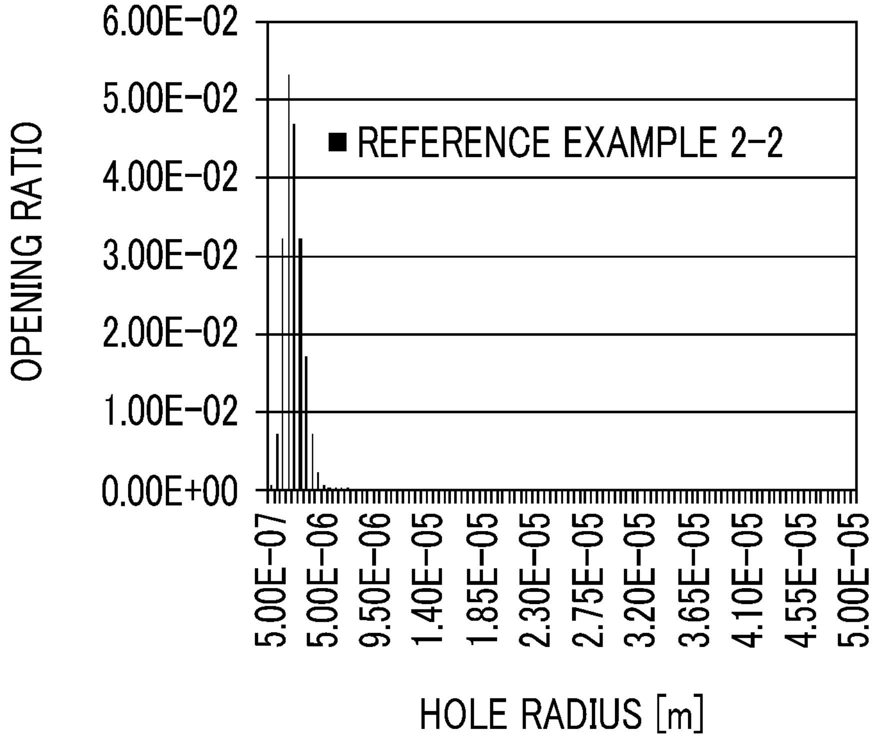
6.00E-02
5.00E-02
4.00E-02
3.00E-02
2.00E-02
1.00E-02
0.00E+00
OPENING RATIO
REFERENCE EXAMPLE 2-2
5.00E-07
5.00E-06
9.50E-06
1.40E-05
1.85E-05
2.30E-05
2.75E-05
3.20E-05
3.65E-05
4.10E-05
4.55E-05
5.00E-05
HOLE RADIUS [m]

FIG. 29

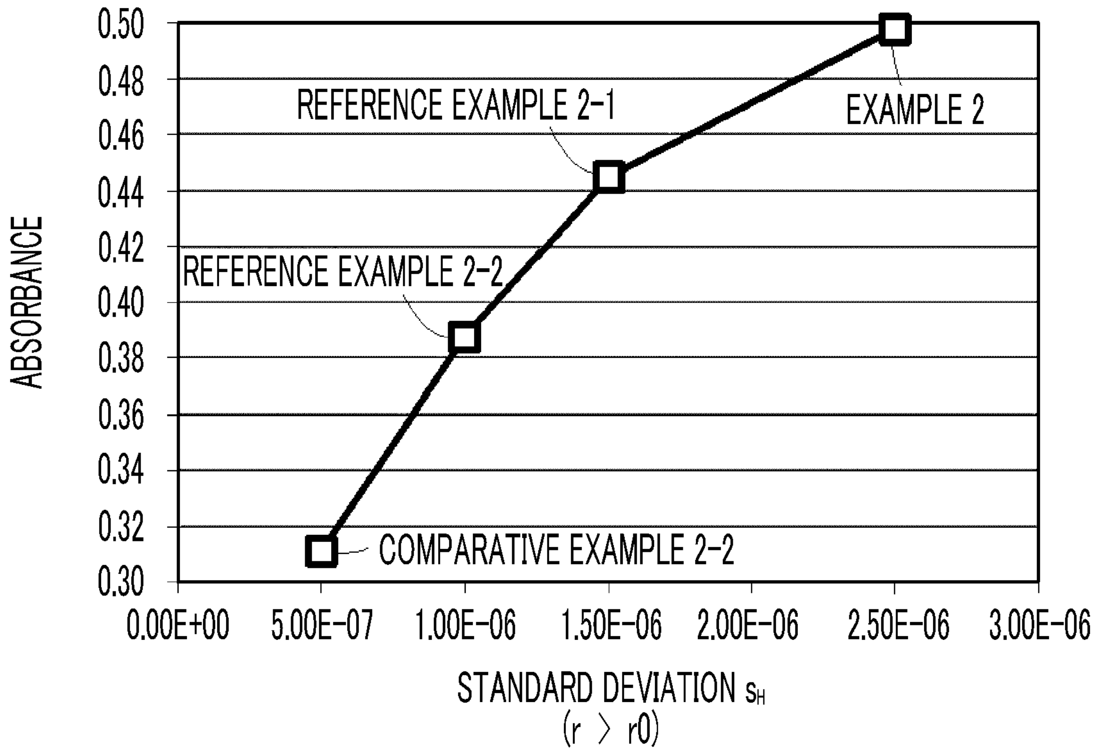
0.50
0.48
0.46
0.44
0.42
0.40
0.38
0.36
0.34
0.32
0.30
ABSORBANCE
REFERENCE EXAMPLE 2-1
EXAMPLE 2
REFERENCE EXAMPLE 2-2
COMPARATIVE EXAMPLE 2-2
0.00E+00
5.00E-07
1.00E-06
1.50E-06
2.00E-06
2.50E-06
3.00E-06
STANDARD DEVIATION sH
(r > r0)

FIG. 30

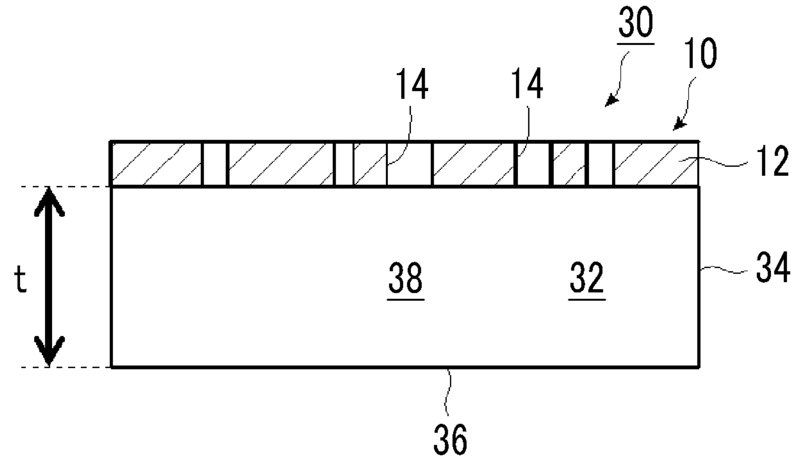


FIG. 31

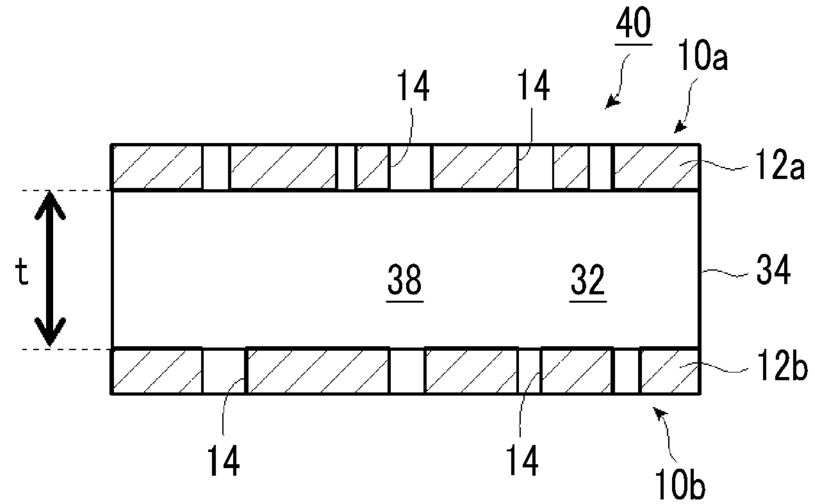


FIG. 32

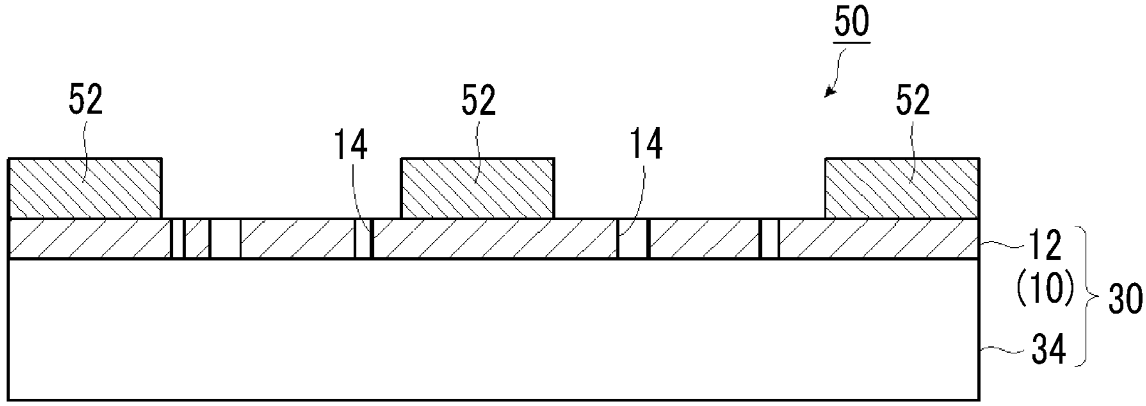

FIG. 33

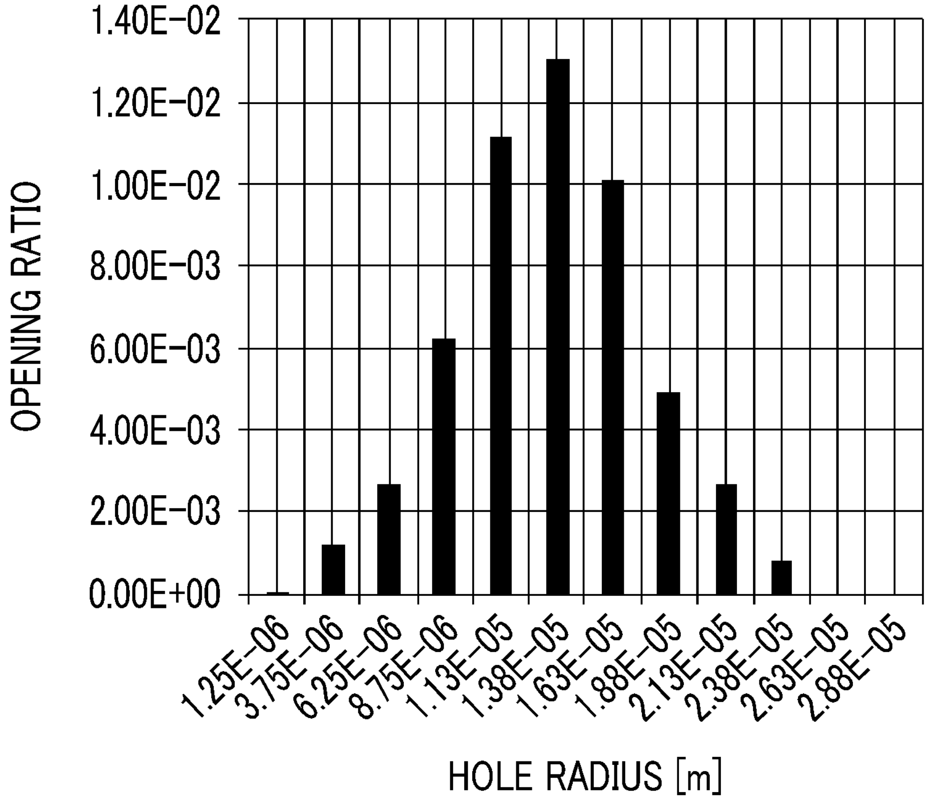
1.40E-02
1.20E-02
1.00E-02
8.00E-03
6.00E-03
4.00E-03
2.00E-03
0.00E+00
OPENING RATIO
1.25E-06
3.75E-06
6.25E-06
8.75E-06
1.13E-05
1.38E-05
1.63E-05
1.88E-05
2.13E-05
2.38E-05
2.63E-05
2.88E-05
HOLE RADIUS [m]

FIG. 34

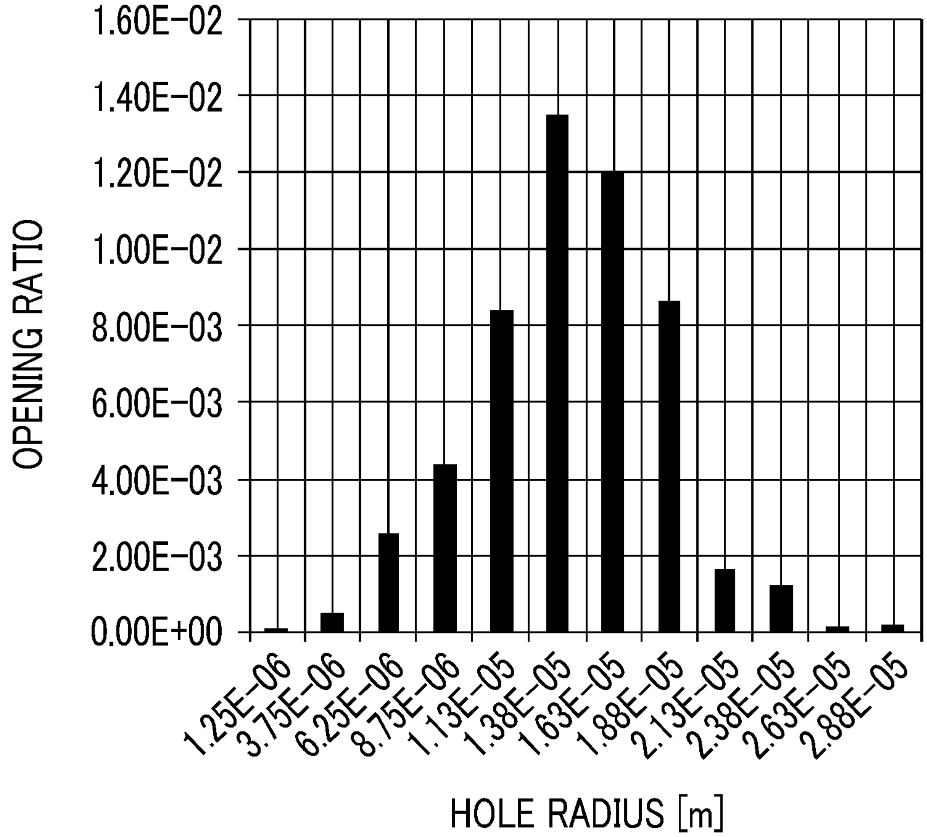
1.60E-02
1.40E-02
1.20E-02
1.00E-02
8.00E-03
6.00E-03
4.00E-03
2.00E-03
0.00E+00
OPENING RATIO
1.25E-06
3.75E-06
6.25E-06
8.75E-06
1.13E-05
1.38E-05
1.63E-05
1.88E-05
2.13E-05
2.38E-05
2.63E-05
2.88E-05
HOLE RADIUS [m]

FIG. 35

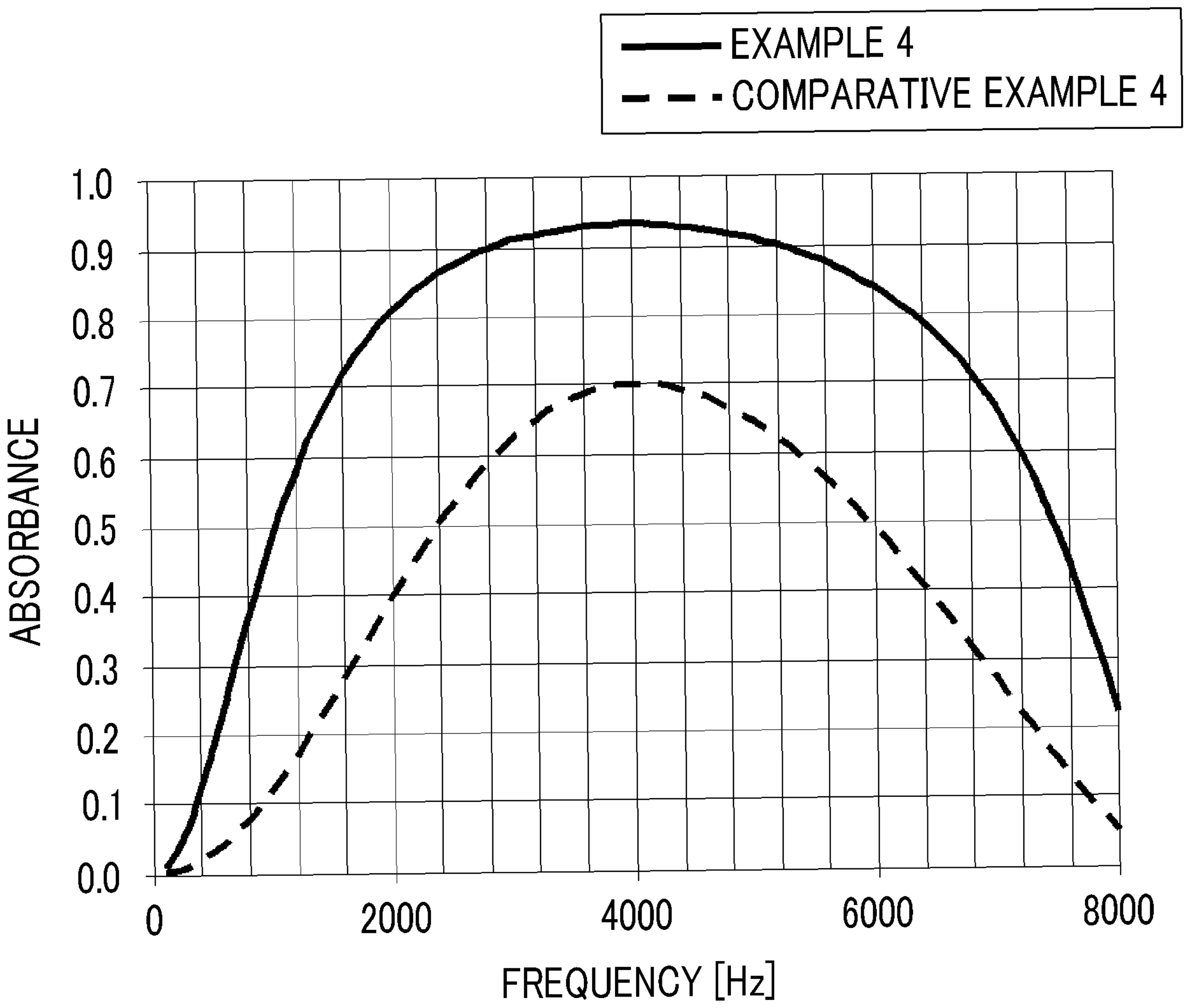
EXAMPLE 4
COMPARATIVE EXAMPLE 4
1.0
0.9
0.8
0.7
0.6
0.5
0.4
0.3
0.2
0.1
0.0
ABSORBANCE
0
2000
4000
6000
8000
FREQUENCY [Hz]

## INTERNATIONAL SEARCH REPORT

International application No.
PCT/JP2018/030805

A. CLASSIFICATION OF SUBJECT MATTER
Int.Cl. G10K11/16(2006.01)i, G10K11/162(2006.01)i, G10K11/168(2006.01)i

According to International Patent Classification (IPC) or to both national classification and IPC

B. FIELDS SEARCHED

Minimum documentation searched (classification system followed by classification symbols)
Int.Cl. G10K11/16, G10K11/162, G10K11/168

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 6-59680 A (UNIX CO., LTD.) 04 March 1994, entire text, all drawings (Family: none) | 1-15 |
| A | JP 2017-3948 A (TAKENAKA CORPORATION) 05 January 2017, entire text, all drawings (Family: none) | 1-15 |
| A | JP 2004-502201 A (3M INNOVATIVE PROPERTIES COMPANY) 22 January 2004, entire text, all drawings & WO 2002/003375 A1, entire text, all drawings | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 October 2018 (25.10.2018) | 06 November 2018 (06.11.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007162253 A
- JP 2007183447 A
- WO 2016060037 A
- JP 2011201123 A
- US 4671859 A
- US 4661219 A
- US 4618405 A
- US 4600482 A
- US 4566960 A
- US 4566958 A
- US 4566959 A
- US 4416972 A
- US 4374710 A
- US 4336113 A
- US 4184932 A


### Non-patent literature cited in the description


- Acoustic Absorbers and Diffusers. CRC Press, 256